(19) Europäisches Patentamt
European Patent Office
Office européen des brevets

(11) EP 4 745 179 A1

(12) EUROPEAN PATENT APPLICATION
published in accordance with Art. 153(4) EPC

(43) Date of publication:
**20.05.2026 Bulletin 2026/21**

(21) Application number: **24839702.8**

(22) Date of filing: **08.07.2024**

(51) International Patent Classification (IPC):
*C08G 73/02* (2006.01)

(52) Cooperative Patent Classification (CPC):
**C08G 73/02**

(86) International application number:
**PCT/JP2024/024536**

(87) International publication number:
**WO 2025/013810 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.07.2023 JP 2023113263**

(71) Applicant: **Resonac Corporation**
**Tokyo 105-7325 (JP)**

(72) Inventors:
- **FUKUSHIMA, Iori**
**Tokyo 105-7325 (JP)**
- **KAMO, Kazuyuki**
**Tokyo 105-7325 (JP)**
- **MIYA, Takanori**
**Tokyo 105-7325 (JP)**

(74) Representative: **Hoffmann Eitle**
**Patent- und Rechtsanwälte PartmbB**
**Arabellastraße 30**
**81925 München (DE)**

(54) **METHOD FOR PRODUCING ARYLAMINE POLYMER**

(57) A method for producing an arylamine polymer, comprising: forming a reaction liquid including an arylamine polymer by reacting a raw material monomer including an aromatic compound (A) having two or more halogen atoms or triflate groups directly bonded to an aromatic ring, and an aromatic compound (B) having an amino group, in the presence of a palladium-containing catalyst and a water-insoluble organic solvent; forming a mixed liquid of the reaction liquid, water, and a water-soluble organic solvent which is compatible with the water-insoluble organic solvent; separating the mixed liquid into an organic phase and an aqueous phase; and collecting the organic phase.



Processed by Luminess, 75001 PARIS (FR)

**Description**

TECHNICAL FIELD

Embodiments of the present invention relate to a method for producing an arylamine polymer.

BACKGROUND ART

Organic electronics elements such as organic electroluminescence elements (hereinafter referred to as organic EL element), organic photoelectric conversion elements, and organic transistors are known as elements that perform electrical operations using organic materials. Thereamong, organic EL elements are attracting attention for potential use in large-surface area solid state lighting applications to replace incandescent lamps, gas-filled lamps, and the like. Further, organic EL elements are also attracting attention as the leading self-luminous display for replacing liquid crystal displays (LCDs) in the field of flat panel displays (FPDs), and commercial products are becoming increasingly available.

Various studies on organic electronics materials for configuring organic electronics elements have been advanced. Thereamong, in the field of organic EL elements, development of charge transport polymers capable of simple film formation through wet processes such as plate-based printing such as relief printing and intaglio printing, and plateless printing such as inkjet printing.

As an example of charge transport polymers, arylamine polymers are widely known, and studies are being conducted to improve properties of organic EL elements through molecular design of polymers. As a method for synthesizing arylamine polymers, coupling reactions such as Kumada coupling, Still coupling, Negishi coupling, Suzuki-Miyaura coupling, Hiyama coupling, the Buchwald-Hartwig reaction, and the like can be suitably used (Patent Document 1).

Thereamong, the Buchwald-Hartwig reaction is useful in the molecular design of arylamine polymers because it is easy to obtain a compound as a raw material monomer. However, impurities derived from halogen compounds used as a raw material during the reaction tend to remain in the polymer. In addition, impurities derived from complexes including heavy metals such as palladium used as a catalyst during the reaction may remain in the polymer.

When an arylamine polymer (hereinafter also referred to as polymer) obtained through the Buchwald-Hartwig reaction is used as an organic electronics material, impurities remaining in the polymer contribute to deterioration of properties of the organic electronic element, such as an increase in emission start voltage, a decrease in emission efficiency, and a decrease in stability. Therefore, in order to improve the properties of the organic electronics element, a simple method for producing an arylamine polymer having high purity is desired.

PRIOR ART DOCUMENTS

PATENT DOCUMENT

Patent Document 1: JP 2011-105790 A
Patent Document 2: JP 2020-122099 A

SUMMARY OF THE INVENTION

PROBLEMS TO BE SOLVED BY THE INVENTION

Meanwhile, Patent Document 2 discloses a separation and purification method for reducing impurities included in a polymer by mixing anisole with a reaction liquid including the polymer obtained through the Buchwald-Hartwig reaction. However, in the development of polymers, the present inventors have found that when a reaction liquid after polymer synthesis is in a suspended state, an emulsion is likely to form at the time of separation and purification, making it difficult to apply the above method. In particular, when a polymer having a branched structure is produced through the Buchwald-Hartwig reaction, the reaction liquid tends to be in a suspended state and tends to form an emulsion during separation and purification. Thus, there is a demand for a production method that can control emulsion formation, favorably perform separation and purification, and easily obtain a polymer with few impurities, even when a reaction liquid including a polymer is in a suspended state.

Therefore, embodiments of the present invention provide a method for producing an arylamine polymer, the method capable of favorably performing separation and purification of an arylamine polymer, and easily obtaining an arylamine polymer having few impurities.

MEANS TO SOLVE THE PROBLEMS

The inventors have intensively investigated a method for producing an arylamine polymer, and discovered that the above issue can be resolved by using a water-soluble organic solvent compatible with a water-insoluble organic solvent included in a reaction liquid in separation and purification of an arylamine polymer, thereby completing the present invention.

That is, although embodiments of the present invention relate to the following, the present invention is not limited to the following embodiments and includes various embodiments.

<1> A method for producing an arylamine polymer, including:

forming a reaction liquid including an arylamine polymer by reacting a raw material monomer including an aromatic compound (A) having two or more halogen atoms or triflate groups directly bonded to an aromatic ring, and an aromatic compound (B) having an amino group, in the presence of a palladium-containing catalyst and a water-insoluble organic solvent;
forming a mixed liquid of the reaction liquid, water, and a water-soluble organic solvent which is compatible with the water-insoluble organic solvent;
separating the mixed liquid into an organic phase and an aqueous phase; and
collecting the organic phase.

<2> The production method according to <1>, wherein the arylamine polymer has at least a branched structure represented by formula (I) below.

[Chemical Formula 1]

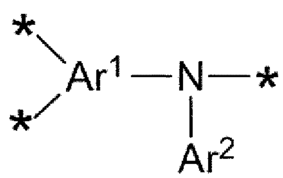

(I)

In the formula, $Ar^1$ represents a trivalent organic group derived from an aromatic hydrocarbon or aromatic heterocycle of 2 to 30 carbon atoms, or triarylamine, $Ar^2$ represents an aryl group derived from an aromatic hydrocarbon of 6 to 30 carbon atoms, and * represents a bonding site with another structure.

<3> The production method according to <2>, wherein in the formula (I), $Ar^2$ has a structure represented by formula (b-1) below.

[Chemical Formula 2]

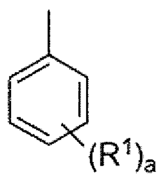

(b - 1)

In the formula, $R^1$ represents an alkyl group of 1 to 12 carbon atoms, an electron-withdrawing group, or an electron-donating group, and a is an integer from 0 to 5.

<4> The production method according to any one of <1> to <3>, wherein the raw material monomer further includes an aromatic compound (C), and the aromatic compound (C) has one halogen atom or triflate group directly bonded to an aromatic ring, and a polymerizable functional group.

<5> The production method according to any one of <1> to <4>, wherein a base is further used in the reaction of the

raw material monomer.

<6> The production method according to <5>, wherein the base includes an organic alkali metal compound.

<7> The production method according to any one of <1> to <6>, further comprising: adding a heavy metal scavenger to the mixed liquid.

<8> The production method according to any one of <1> to <7>, wherein the water-soluble organic solvent includes an alcohol.

<9> The production method according to any one of <1> to <8>, wherein the water-insoluble organic solvent includes an aromatic hydrocarbon solvent.

<10> The production method according to any one of <1> to <9>, wherein the palladium-containing catalyst includes at least one selected from the group consisting of bis(di-t-butyl(4-dimethylaminophenyl)phosphine)dichloropalladium(II), bis(tri-t-butylphosphine)palladium(0), $PdArBrP(t\text{-}Bu)_3$ (where Ar represents a substituted or unsubstituted aryl group of 6 to 30 carbon atoms), and chloro(2-dicyclohexylphosphino-2',4',6'-triisopropyl-1,1'-biphenyl)[2-(2'-amino-1,1'-biphenyl)]palladium.

The disclosure of the present application relates to the subject matter described in Japanese Patent Application No. 2023-113263 filed on July 10, 2023, the entire disclosed contents of which are incorporated herein by reference.

## EFFECTS OF THE INVENTION

In an embodiment of the present invention, it is possible to provide a method for producing an arylamine polymer, the method capable of favorably performing separation and purification of an arylamine polymer, and easily obtaining an arylamine polymer having few impurities.

## BRIEF DESCRIPTION OF THE DRAWINGS

[FIG. 1] FIG. 1 is a cross-sectional schematic view illustrating one example of an organic EL element according to one embodiment of the present invention.

[FIG. 2] FIG. 2 is a schematic cross-sectional view illustrating a structure of a hole-only device manufactured in an example.

## EMBODIMENTS FOR CARRYING OUT THE INVENTION

Embodiments of the present invention will be described below. However, the present invention is not limited to the following embodiments, and various modifications are possible without departing from the gist thereof.

In some embodiments, a method for producing an arylamine polymer can include a step of synthesizing the arylamine polymer, and a step of separating and purifying the arylamine polymer. The step of synthesizing the arylamine polymer includes reacting a raw material monomer in the presence of a palladium-containing catalyst and a water-insoluble organic solvent to form a reaction liquid including the arylamine polymer. This reaction may be performed according to a Buchwald-Hartwig reaction.

The synthesis step includes reacting a raw material monomer including an aromatic compound (A) having two or more halogen atoms or triflate groups directly bonded to an aromatic ring, and an aromatic compound (B) having an amino group, in the presence of a palladium-containing catalyst and a water-insoluble organic solvent, to form a reaction liquid including the arylamine polymer. In one embodiment, the raw material monomer preferably further includes, in the molecule, an aromatic compound (C) having one halogen atom or triflate group directly bonded to an aromatic ring.

The separation and purification step includes forming a mixed liquid of the reaction liquid, water, and a water-soluble organic solvent compatible with the water-insoluble organic solvent, and separating the mixed liquid into an organic phase and an aqueous phase. The step can include collecting the organic phase after the separation. The step can include collecting a polymer from the organic phase.

Each of the steps will be described in more detail below.

### <Synthesis Step>

The Buchwald-Hartwig reaction is a reaction for forming an N-C bond by coupling an amine compound and typically a halogen compound, and can be performed using a method known in the art.

In one embodiment, in the presence of a palladium-containing catalyst and a water-insoluble organic solvent, a raw material monomer including an aromatic compound (A) having two or more halogen atoms or triflate groups directly

bonded to an aromatic ring, and an aromatic compound (B) having an amino group is reacted in the synthesis step. Through this reaction, a reaction liquid including an arylamine polymer can be obtained. In one embodiment, the raw material monomer preferably further includes an aromatic compound (C) having one halogen atom or triflate group in the molecule. The structures of the aromatic compounds (A), (B) and (C) usable as the raw material monomer, and an arylamine polymer obtained through the reaction will be described below.

(Palladium-Containing Catalyst)

A palladium-containing catalyst used in the synthesis step means a catalyst including palladium and a ligand. The palladium-containing catalyst includes a complex compound or a salt including palladium and a ligand, or a combination of a precursor of the palladium-containing catalyst, and a ligand or ligand precursor. In the production method according to the present embodiment, a known catalyst used in the Buchwald-Hartwig reaction can be used.

The ligand preferably has a bulky structure, and specific examples include a phosphine ligand and a Buchwald ligand. N-heterocyclic carbene (NHC) can also be used as the ligand. Thereamong, a phosphine ligand such as tri-t-butylphosphine, tri-o-tolylphosphine, or triphenylphosphine, is more preferable.

The palladium-containing catalyst may be a palladium(0) complex or a palladium(II) salt. Specific examples of the palladium-containing catalyst include bis(tri-t-butylphosphine)palladium(0), tetrakis(triphenylphosphine)palladium(0), bis[1,2-bis(diphenylphosphino)ethane]palladium(0), dichlorobis(triphenylphosphine)palladium(II), dichlorobis(tri-o-tolylphosphine)palladium(II), bis[di-t-butyl(4-dimethylaminophenyl)phosphine]dichloropalladium(II), [1,1'-bis(di-t-butylphosphino)ferrocene]dichloropalladium(II), dichloro[1,1'-bis(diphenylphosphino)ferrocene]palladium(II), dichloro[1,2-bis(diphenylphosphino)ethane]palladium(II), and dichloro[1,3-bis (diphenylphosphino)propane]palladium(II), Umicore CX31 and CX32 having NHC ligands. These compounds can also be used in combination with a ligand or a ligand precursor described above.

A precursor of a palladium-containing catalyst can also be used to generate active palladium from the precursor in a reaction system by means of components such as organometallic reagents, phosphines, and amines present in the system. Examples of the precursor include bis(dibenzylideneacetone)palladium(0), palladium(II) acetate, palladium(II) chloride, di-μ-chlorobis[(η-allyl)palladium(II)], dichlorobis(acetonitrile)palladium(II), and dichlorobis(benzonitrile)palladium(II).

When using the precursor of the palladium-containing catalyst described above, it is preferable to use a precursor of a ligand (ligand), such as a triphosphonium salt, together. A specific example of the triphosphonium salt is tri-t-butylphosphonium tetrafluoroborate. This compound produces tri-t-butylphosphine in a system, and functions as a ligand for palladium.

Although not particularly limited, in one embodiment, it is preferable to use bis(tri-t-butylphosphine) palladium(0), and tri-t-butylphosphonium tetrafluoroborate in combination as a palladium-containing catalyst.

In one embodiment, a palladium-containing catalyst having at least a structure represented by formula (1) below can be suitably used as a catalyst.

$$PdArBrP(t\text{-}Bu)_3 \qquad (1)$$

In the formula, Ar is a substituted or unsubstituted aryl group of 6 to 30 carbon atoms. Ar may be, for example, a substituted or unsubstituted phenyl group. At least one hydrogen atom in an aromatic ring of an aryl group may be substituted with an alkyl group of 1 to 12 carbon atoms.

A specific examples of the palladium-containing catalyst having the above structure is a compound represented by formula (2) below. This compound can be produced, for example, by reacting tris(dibenzylideneacetone) dipalladium(0), o-bromotoluene, and tri-tert-butylphosphine.

[Chemical Formula 3]

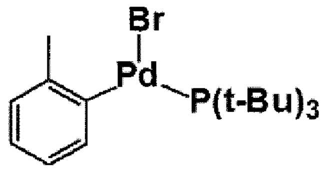

(2)

In another embodiment, a palladium-containing catalyst having at least a structure represented by formula (3) below can be suitably used as a catalyst.

[Chemical Formula 4]

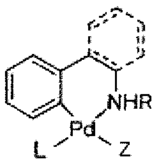

(3)

In the formula, R represents a hydrogen atom, or an alkyl group of 1 to 10 carbon atoms. L represents a ligand. Z represents a leaving group. The leaving group is one selected from the group consisting of a halogen atom, a methylsulfonyloxy group ($-OS_2CH_3$), a tosyl group ($-OSO_2C_6H_5CH_3$), and a trifluoromethylsulfonyloxy group ($-OSO_2CH_3$).

A specific example of the catalyst having the structure represented by the above formula (3) is the following.

[Chemical Formula 5]

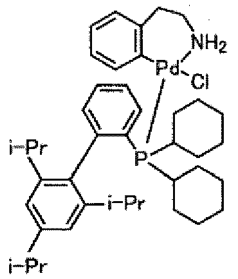

(3 − 1)

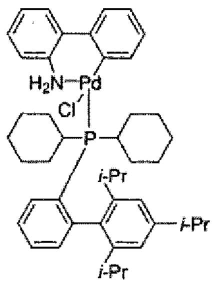

(3 − 2)

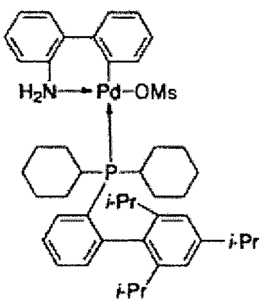

(3 − 3)

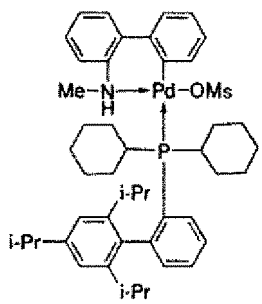

(3 − 4)

In the production method according to the present embodiment, a palladium-containing catalyst which can be suitably used can be produced according to well known methods, and can also be commercially available. For example, XphosPd series manufactured by Aldrich Chemical Company can be used. In particular, catalysts represented by formulas (3-1) to (3-4) above are available as XphosPd G1, XphosPd G2, XphosPd G3, and XphosPd G4. In one embodiment, catalysts represented by formulas (3-2) and (3-4) above are more preferably used, which are available in turn as XphosPd G2 and XphosPd G4.

The amount used of the palladium-containing catalyst is not particularly limited. The amount used of the catalyst may be typically within a range from 0.1% by mole or more, to 20% by mole or less, relative to the aromatic compound (B) having an amino group, used as a raw material monomer. By adjusting the amount used of the catalyst within the above range, it is easy to proceed with the reaction efficiently and to control formation of by-products. In one embodiment, the amount used of catalyst is preferably within a range from 0.1% by mole to 10% by mole, more preferably from 0.1% by mole to 5% by mole, and even more preferably from 0.2% by mole to 2% by mol, relative to the aromatic compound (B) having an amino group.

In the production method according to the present embodiment, it is possible to proceed with the reaction efficiently even when the amount used of a catalyst is reduced. Thus, by adjusting the amount used of the catalyst, the amount of impurities derived from the catalyst or the like included in a polymer can be easily reduced.

In one embodiment, a palladium-containing catalyst may further include an additive. The additive is preferably a compound that functions as a ligand relative to a palladium metal. Specific examples of the compound, which can be used

as the additive, include $P(t\text{-}Bu)_3 \cdot HBF_3$, and $PC_{y3} \cdot HBF_3$, Xphos(2-dicyclohexylphosphino-2', 4', 6'-triisopropylbiphenyl). In particular, $P(t\text{-}Bu)_3 \cdot HBF_3$ is preferable. When the additive is used, reactivity of the palladium catalyst tends to be further improved.

(Base)

In a reaction of a raw material monomer including an aromatic compound (A) having two or more halogen atoms or triflate groups directly bonded to an aromatic ring, and an aromatic compound (B) having an amino group, it is preferable to use a base in addition to the above palladium-containing catalyst. The base is not particularly limited, and may be either an inorganic base or an organic base. Although not particularly limited, in one embodiment, an organic base is preferable, and for example, an organic alkali metal compound, such as sodium t-butoxy or n-butyllithium, can be suitably used.

The amount used of the base is not particularly limited, but may be typically within a range from 1.0 mole equivalents or more, to 4 mole equivalents or less, relative to the mole number of the aromatic compound (B) having an amino group used as a raw material monomer. By adjusting the amount used of the base within the above range, it is easy to proceed with the reaction efficiently and to control formation of by-products. In one embodiment, it is preferable to use a palladium-containing catalyst together with a base in the reaction of the raw material monomer. It is more preferable to use a palladium-containing catalyst together with an organic alkali metal compound.

(Water-insoluble Organic Solvent)

The reaction of the raw material monomer including an aromatic compound (A) having two or more halogen atoms or triflate groups directly bonded to an aromatic ring, and an aromatic compound (B) having an amino group is preferably performed in the presence of a water-insoluble organic solvent. In this specification, the water-insoluble organic solvent means a solvent which, when a mixed liquid is prepared by gentle stirring with the same volume of pure water at a temperature of 20°C at one atmosphere, maintains a uniform appearance of the mixed liquid even after flow by stirring is stopped, and is a solvent other than a water-soluble organic solvent described below.

Examples of the water-insoluble organic solvent include aromatic hydrocarbon solvents such as benzene, toluene, and anisole, aliphatic ether solvents such as dioxane, tetrahydrofuran, and dimethoxyethane, amide solvents such as N,N-dimethylformamide and N,N-dimethylacetamide, and dimethyl sulfoxide. In one embodiment, the reaction is preferably performed in the presence of an aromatic hydrocarbon solvent. Thereamong, toluene or anisole may be more preferable, and toluene may be even more preferable.

The reaction temperature is not particularly limited, and may be appropriately set in accordance with a boiling point of a water-insoluble organic solvent used in the reaction. For example, the reaction temperature may be within a range from 0°C to 200°C. In one embodiment, the reaction temperature is preferably within a range from 80°C to 180°C, and more preferably within a range from 100°C to 160°C. In one embodiment, when toluene is used, the reaction can proceed at a temperature of approximately 120°C. When anisole is used, the reaction can proceed at a temperature of approximately 160°C. When anisole is used, a higher temperature can be applied, and thus the reaction can proceed more efficiently.

The reaction time is preferably 1 to 48 hours, more preferably 1 to 24 hours, and even more preferably 1 to 12 hours. Completion of the reaction can be confirmed using a known method, such as gas chromatography.

The raw material monomer may be a mixture including at least an aromatic compound (A) having two or more halogen atoms or triflate groups directly bonded to an aromatic ring, and an aromatic compound (B) having an amino group. In the raw material monomer, the blending ratio of the aromatic compound (A) to the aromatic compound (B) is not particularly limited. However, if an unreacted raw material monomer remains excessively in a reaction system, undesirable side reactions may occur, and thus the blending ratio is preferably appropriately adjusted. The blending ratio can be appropriately adjusted in consideration of structures of the aromatic compounds (A) and (B) to be used, and a structure of a desired arylamine polymer.

In one embodiment, the blending ratio (A) : (B) of the aromatic compound (A) to the aromatic compound (B) included in the raw material monomer may be preferably (0.5 to 1.5) : 1.0, more preferably (0.6 to 1.4) : 1.0, as a ratio of the number of reaction points based on amino groups.

In one embodiment, in addition to the aromatic compounds (A) and (B), the raw material monomer may further include an aromatic compound (C) having one halogen atom or triflate group in the molecule. In this case, a blending ratio (A) : (B) : (C) of the aromatic compounds may be preferably (0.2 to 0.9) : 1.0 : (0.0 to 1.0), more preferably (0.3 to 0.7) : 1.0 : (0.1 to 0.9), even more preferably (0.4 to 0.6) : 1.0 : (0.2 to 0.8), as the ratio of the number of reaction points based on amino groups.

<Separation and Purification Process>

In the polymer obtained through the Buchwald-Hartwig reaction, impurities derived from components such as a catalyst and a raw material monomer used in the reaction are likely to remain. Furthermore, the present inventors have found that when a polymer having a branched structure is synthesized, a reaction liquid tends to be in a suspended state and tends to form an emulsion when water is added. When an emulsion is formed, it becomes difficult to separate an organic phase and an aqueous phase even when water is added in a subsequent separation and purification step. As a result, it becomes difficult to collect the polymer from the organic phase. Even if the polymer is collected, a large amount of impurities remains in the polymer.

In contrast, in the production method according to the present embodiment, the reaction liquid, water, and a water-soluble organic solvent compatible with a water-insoluble organic solvent (hereinafter also referred to as water-soluble organic solvent) are mixed to form a mixed liquid. By using the water-soluble organic solvent at the time of the mixing, the issue caused by the emulsion is eliminated (demulsification is achieved), and a work of separating the mixed liquid into an organic phase and an aqueous phase can be easily performed. Therefore, the polymer can be easily collected from the organic phase, and the content of impurities remaining in the polymer can be reduced.

In the manufacturing method according to the present embodiment, it is sufficient that the separation and purification step includes forming a mixed liquid of a reaction liquid, water, and a water-soluble organic solvent compatible with a water-insoluble organic solvent, and other steps can be performed according to a method known to those skilled in the art.

Here, in the present specification, the water-soluble organic solvent means a solvent which, when a mixed liquid is prepared by gentle stirring with the same volume of pure water at a temperature of 20°C at one atmosphere, maintains a uniform appearance even after stopping the stirring. It is preferable that the water-soluble organic solvent mix with the water-insoluble organic solvent when combined, and do not separate from each other. That is, it is preferable that the water-soluble organic solvent be compatible with the water-insoluble organic solvent.

Examples of water-soluble organic solvents usable in the production method according to the present embodiment include alcohols, ether, ketones, and solvents containing nitrogen atoms.

Examples of alcohols include methanol, ethanol, 1-propanol, 2-propanol(isopropanol), 2-methyl-2-propanol, 1-butanol, 2-butanol, 2-methyl-1-propanol, allyl alcohol, ethylene glycol, propylene glycol, propylene glycol monomethyl ether, and ethylene glycol monomethyl ether.

Examples of ethers include diethyl ether, dimethyl ether, propylene glycol dialkyl ether, and diethylene glycol diethyl ether.

Examples of nitrogen atom-containing solvents include N-methylpyrrolidone, dimethylacetamide, and dimethylformamide.

Examples of ketones include diethyl ketone, methyl propyl ketone, methyl butyl ketone, methyl isopropyl ketone, methyl isobutyl ketone, methyl amyl ketone, diisopropyl ketone, methyl ethyl ketone, acetone, and diacetone alcohol.

As the water-soluble organic solvent compatible with the water-insoluble organic solvent, one of the above solvents may be used alone, or two or more thereof may be used in combination. In one embodiment, an alcohol is preferable, and in particular, methanol can be favorably used.

As the water-soluble organic solvent, it is preferable to use a solvent which is compatible with the water-insoluble organic solvent included in the reaction liquid from among the above solvents. For example, it is preferable that the water-insoluble organic solvent and the water-soluble organic solvent form a single phase at a mass ratio in the mixed liquid.

Although not bound by theory, in the Buchwald-Hartwig reaction, a salt such as NaBr is formed due to a raw material monomer and a base used, and such a salt is poorly soluble to a water-insoluble organic solvent used in synthesis of a polymer. In addition, tert-BuOH formed as a byproduct in the reaction lowers the solubility of the polymer. Furthermore, in contrast to a reaction liquid including a polymer having a linear structure, a reaction liquid including a polymer having a branched structure tends to lower the solubility of a polymer and to become a suspended state. Therefore, it is considered that a reaction liquid including an arylamine polymer, especially an arylamine polymer having a branched structure, tends to form an emulsion during separation and purification.

In contrast, according to the present embodiment, emulsion formation can be controlled by mixing a reaction liquid, water, and a water-soluble organic solvent compatible with a water-insoluble organic solvent at the time of separation and purification. Here, the water-insoluble organic solvent means the water-insoluble organic solvent used in the step of synthesizing the arylamine polymer (hereinafter also referred to as polymer). When a reaction liquid is mixed with a water-soluble organic solvent (for example, methanol), a salt, such as NaBr, is compatible with the water-soluble organic solvent, such as methanol. Thus, when water is further added at the time of the mixing, not only tert-BuOH but also a salt, such as NaBr, move to the aqueous phase together with methanol. Therefore, it is considered possible to control formation of an emulsion, to facilitate separation of the organic phase and the aqueous phase, and to easily reduce components as impurities.

From the above viewpoint, it is desirable that the amount used of a water-soluble organic solvent be appropriately

adjusted such that a salt (solid matter) in a reaction liquid is dissolved. The amount used of water is preferably adjusted appropriately such as to facilitate separation of an organic phase and an aqueous phase. In one embodiment, the ratio of water to a water-soluble organic solvent to be added to a reaction liquid is preferably 9/1 to 5/5, and more preferably 8/2 to 6/4, based on a mass ratio of water to the water-soluble organic solvent.

A method for forming a mixed liquid of a reaction liquid including a polymer, water, and a water-soluble organic solvent compatible with a water-insoluble organic solvent is not particularly limited. In one embodiment, a mixed liquid may be formed using a method where water and the water-soluble organic solvent are simultaneously added to a reaction liquid including a polymer, and further mixed. Here, as necessary, water and the water-soluble organic solvent may be premixed and used. In another embodiment, a mixed liquid may be formed using a method where after mixing a reaction liquid including a polymer with the water-soluble organic solvent, water is further added and mixed.

In one embodiment, a heavy metal scavenger may be further added during mixing to form a mixed liquid of a reaction liquid, water, and the water-soluble organic solvent. By adding the heavy metal scavenger during the mixing, impurities derived from a catalyst or the like can be more effectively removed. The heavy metal scavenger may be any compound capable of chelating and scavenging a heavy metal, such as palladium used as a catalyst, or any compound capable of specifically binding to and adsorbing the heavy metal. For example, a silica compound having a specific functional group, a dithiocarbamate, or the like can be used as a heavy metal scavenger.

The amount used of a heavy metal scavenger is not particularly limited. From the viewpoint of further enhancing the effect of removing impurities from the polymer by using a water-soluble organic solvent in the separation and purification process as described above, it is preferable to adjust the amount used of a heavy metal scavenger. In one embodiment, based on the number of moles of palladium(Pd) in a palladium-containing catalyst, a heavy metal scavenger is preferably used in an amount of 1 mole equivalent or more to 2,000 mole equivalents or less, and more preferably in an amount of 1 mole equivalent or more to 500 mole equivalents or less.

In the above embodiment, a dithiocarbamate can be suitably used as a heavy metal scavenger. Since chelate formed by coordination of a dithiocarbamate to heavy metals is easily soluble in water, when water is added for phase separation, heavy metals, such as Pd, derived from a catalyst can be easily transferred to the aqueous phase. The dithiocarbamate is not particularly limited as long as it is a compound having a dithiocarbamyl group in the molecule, but an alkyl dithiocarbamate is preferable. Thereamong, an alkyl dithiocarbamate having an alkyl group of 1 to 6 carbon atoms is more preferable from the viewpoint of water solubility.

Specific examples include dimethyldithiocarbamates, diethyldithiocarbamates, dipropyldithiocarbamates, dibutyldithiocarbamates, ethylenebisdithiocarbamates, methyldithiocarbamates, ethyldithiocarbamates, and n-propyldithiocarbamates, and the form of each salt may be a sodium salt, a potassium salt, or the like. Thereamong, sodium N,N-diethyldithiocarbamate ($NaS_2CN(C_2H_5)_2$) can be suitably used.

The method for collecting a polymer from a mixed liquid is not particularly limited and may be performed by applying a method well known to those skilled in the art. For example, a mixed liquid obtained through the above mixing may be separated into an organic phase and an aqueous phase according to a phase separation method. By using this separation method, a desired polymer can be easily collected while removing impurities. In one embodiment, when a mixed liquid is separated into an organic phase and an aqueous phase, water may be added as necessary to more easily perform the separation. Here, the water is preferably deionized water.

In one embodiment, the separation and purification step may include adding water and a water-soluble organic solvent (preferably methanol) to a reaction liquid including a polymer (preferably a toluene solution) and mixing them to form a mixed liquid, and adding water as necessary when separating the mixed liquid. A desired polymer can be obtained by distilling off a water-insoluble organic solvent from an organic phase obtained through the separation.

In another embodiment, the separation and purification step may include mixing a reaction liquid including a polymer, the water-soluble organic solvent, and an aqueous solution including a dimethyldithiocarbamate, and further adding water and mixing, as necessary. The separation and purification step may include separating the mixed liquid thus obtained to remove the aqueous phase, and removing the water-insoluble organic solvent from the organic phase obtained after the phase separation to obtain a desired polymer. Further, the separation and purification step may include redissolving the obtained polymer in a water-soluble organic solvent, such as methanol, and recrystallizing it, as necessary.

In one embodiment, from the viewpoint of providing a polymer having a purity which can be suitably usable as an organic electronics material, the content of palladium in a polymer is preferably 100 ppm or less, more preferably 80 ppm or less, and even more preferably 50 ppm or less. The content (total amount) of halogen atoms in the polymer is preferably 300 ppm or less, more preferably 100 ppm or less, and even more preferably 60 ppm or less.

In the production method according to the above embodiment, a polymer having a palladium content, and a halogen atom content, such as a bromine atom or a chlorine atom, within the above ranges can be easily provided. Thus, in the production method according to the above embodiment, it becomes possible to provide a polymer which can be suitably used as an organic electronics material.

<Arylamine Polymer>

In the production method according to the above embodiment, an arylamine polymer (hereinafter, sometimes abbreviated as polymer) may be any polymer obtained through a reaction of a raw material monomer including an aromatic compound (A) having two or more halogen atoms or triflate groups directly bonded to an aromatic ring, and an aromatic compound (B) having an amino group, and the structure thereof is not particularly limited. Depending on a raw material monomer used, the polymer may have either a linear structure or a branched structure.

The polymer may, for example, include at least a divalent structural unit L and a monovalent structural unit T each having charge transport properties, and may further include a trivalent or higher structural unit B configuring a branched portion. The polymer may also preferably include at least the trivalent or higher structural unit B, which has charge transport properties and configures a branched portion, and the monovalent structural unit T, and may further include a divalent structural unit. A molecular chain of the polymer has a chain structure including a divalent structural unit and/or a trivalent structural unit. The polymer may have only one type of each structural unit, or multiple types of each structural unit. In the charge transport polymer, each structural unit is bonded to each other at "monovalent" to "trivalent or higher" bonding sites.

Examples of partial structures included in the charge transport polymer are described below. However, the charge transport polymer is not limited to polymers having the following partial structures. In the partial structures, "L" represents a structural unit L, "T" represents a structural unit T, and "B" represents a structural unit B. The symbol "*" represents a bonding site with another structural unit. In the following partial structures, multiple L units may be the same structural unit, or mutually different structural units. This also applies for the T and B units.

(Example of Partial Structure of Linear Polymer)

[Chemical Formula 6] T-L-L-L-L-L-*

(Example of Partial Structure of Branched Polymer)

[Chemical Formula 7]

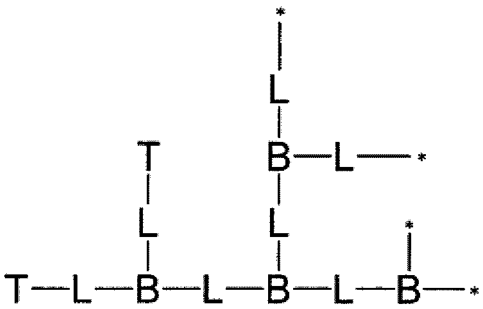

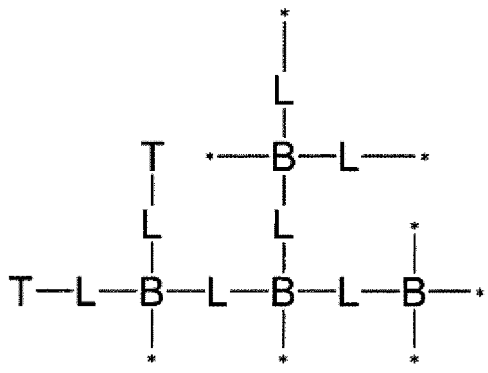

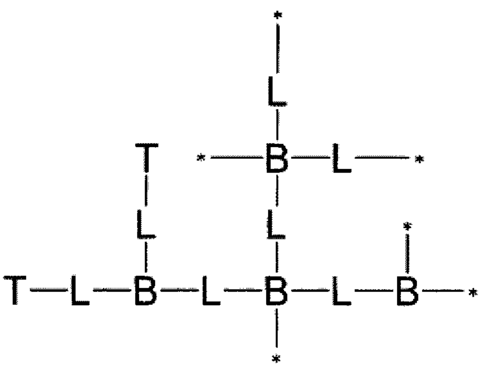

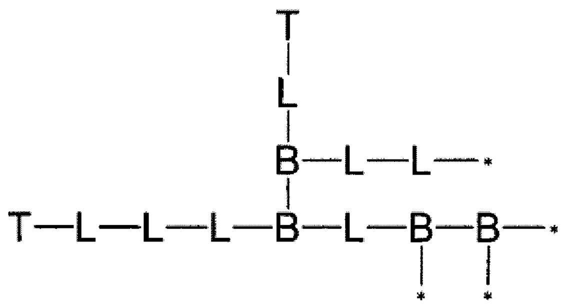

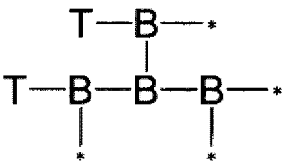

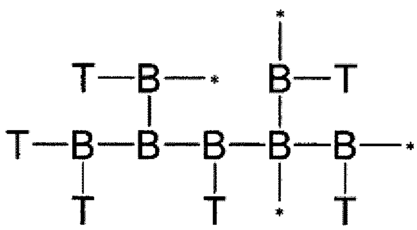

When a polymer has a branched structure, an emulsion tends to be formed easily during separation and purification, and thus effects obtained by using the production method according to the above embodiment become remarkable. From this viewpoint, in one embodiment, it is preferable that a polymer produced using the above production method has a branched structure. A polymer having a branched structure is also preferable from the viewpoint of exhibiting favorable solubility and curability because it has excellent heat resistance and can introduce many terminal groups. Hereinafter, an arylamine polymer having a branched structure (also referred to as a branched polymer) will be described as an example of a polymer that can be produced using the production method described above.

A branched polymer that can be produced using the production method according to the present embodiment preferably includes at least a trivalent structural unit represented by formula (a) below as the structural unit B, and at least a divalent structural unit represented by formula (b) below as the structural unit L, and includes a structure which is represented by formula (I) below and is formed by at least one bonding site of each structural unit directly bonding to each other.

[Chemical Formula 8]

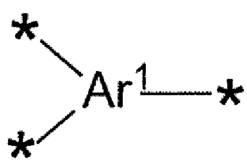

(a)

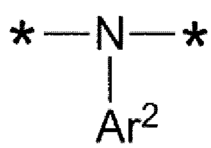

(b)

[Chemical Formula 9]

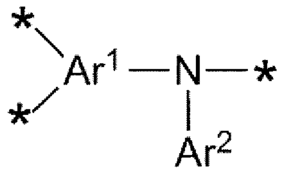

(I)

The branched polymer preferably includes a structure represented by formula (I-1) or formula (I-2) below, and more preferably includes a structure represented by formula (I-2) below.

[Chemical Formula 10]

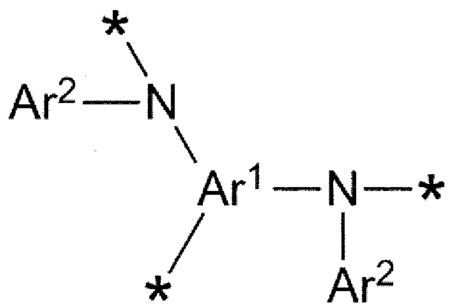

(I − 1)

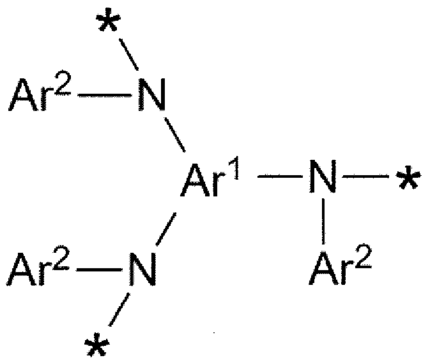

(I − 2)

In the formulas, $Ar^1$ represents a trivalent organic group derived from an aromatic hydrocarbon or aromatic heterocycle, having 2 to 30 carbon atoms, or a triarylamine, $Ar^2$ represents a monovalent organic group derived from an aromatic hydrocarbon having 6 to 30 carbon atoms, and * represents a bonding site with another structure. Details of $Ar^1$ and $Ar^2$ will be described below.

In order to produce a branched polymer including at least a structure represented by the above formula (I), the aromatic compound (A), which has three halogen atoms or triflate groups directly bonded to an aromatic ring, and the aromatic compound (B) having a primary amino group can be used as a raw material monomer.

Hereinafter, each structural unit configuring the branched polymer, and the raw material monomer will be described in more detail.

(Structural Unit B)

The structural unit B is a trivalent or higher structural unit configuring a branched portion of the branched polymer. The structural unit B is preferably hexavalent or lower, more preferably trivalent or tetravalent, from the viewpoint of improving durability of an organic electronics element. The structural unit B preferably has charge transport properties. For example, the structural unit B may be an organic group derived from an aromatic hydrocarbon, an aromatic heterocycle, or a triarylamine. In particular, from the viewpoint of improving durability of an organic electronics element, for example, an organic group (structure) derived from a substituted or unsubstituted triarylamine, carbazole, or fused polycyclic aromatic hydrocarbon can be preferably selected as the structural unit B.

In the present embodiment, the branched polymer incudes at least a trivalent structural unit (hereinafter also referred to as structural unit B1) represented by formula (a) below, as the structural unit B. The structural unit B1 can be derived, for example, by using an aromatic compound represented by formula (A1) below.

[Chemical Formula 11]

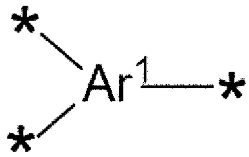

(a)

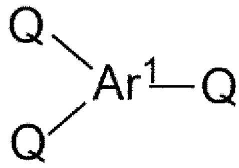

(A1)

In the formulas, $Ar^1$ represents a trivalent organic group derived from an aromatic hydrocarbon, an aromatic heterocycle, or a triarylamine. The trivalent organic group is also called an arenetriyl group or a heteroarenetriyl group. $Ar^1$ is an atomic group obtained by removing three hydrogen atoms from an aromatic ring in an aromatic hydrocarbon, aromatic heterocycle, or a triarylamine.

In one embodiment, $Ar^1$ may preferably be a trivalent organic group derived from an aromatic hydrocarbon or aromatic heterocycle, having 2 to 30 carbon atoms, or triarylamine.

In the formula, * represents a bonding site with another structure.

In the formula, Q represents a halogen atom or a triflate group. The halogen atom may be a chlorine atom, a bromine atom, or an iodine atom. The triflate group ($CF_3SO_2$-) is also called a trifluoromethanesulfonyl group. Q is preferably a halogen atom, and more preferably a bromine atom.

Examples of the aromatic hydrocarbon include benzene, naphthalene, anthracene, tetracene, fluorene, phenanthrene, 9,10 dihydrophenanthrene, triphenylene, pyrene, chrysene, perylene, triphenylene, pentacene, and benzopyrene.

Examples of the aromatic heterocycle include pyridine, pyrazine, quinoline, isoquinoline, acridine, phenanthroline, carbazole, furan, benzofuran, dibenzofuran, pyrrole, thiophene, benzothiophene, dibenzothiophene, oxazole, oxadiazole, thiadiazole, triazole, benzoxazole, benzoxadiazole, benzothiadiazole, benzotriazole, and benzothiophene.

The aromatic hydrocarbon and the aromatic heterocycle may be a monocyclic ring or a condensed ring. The aromatic hydrocarbon and the aromatic heterocycle may have a polycyclic structure where two or more selected from a monocyclic ring and a condensed ring are bonded via a single bond. Examples of the aromatic hydrocarbon having the polycyclic structure include biphenyl, terphenyl, and triphenylbenzene.

In one embodiment, $Ar^1$ may be a trivalent organic group derived from a triarylamine. The triarylamine means a tertiary aromatic amine where three aryl groups (aromatic groups) are bonded to a nitrogen atom. Here, the aryl group is a monovalent organic group derived from an aromatic hydrocarbon or aromatic heterocycle of 2 to 30 carbon atoms. The aromatic hydrocarbon and the aromatic heterocycle may be specifically as described above. In the triarylamine, specific examples of the aryl group derived from the aromatic hydrocarbon group include a phenyl group, a naphthyl group, and a biphenyl group. Specific examples of the aryl group derived from the aromatic heterocyclic group include a thienyl group, a furyl group, a pyrrolyl group, a pyridyl group, and an imidazolyl group. In one embodiment, the triarylamine is preferably triphenylamine.

Each of the aromatic hydrocarbons and aromatic heterocycles included in the above monovalent organic group and trivalent organic group may be unsubstituted or have one or more substituents R. The substituents R are each independently selected from the group consisting of $-R^1$, $-OR^2$, $-SR^3$, $-OCOR^4$, $-COOR^5$, $-SiR^6R^7R^8$, a halogen atom, and a group including a polymerizable functional group described below. In one embodiment, R is more preferably $-R^1$.

$R^1$ to $R^8$ each independently represent a hydrogen atom, a linear, branched, or cyclic alkyl group of 1 to 22 carbon atoms (except when $R^1$ becomes a hydrogen atom), or an aryl group or heteroaryl group of 2 to 30 carbon atoms. The aryl group is an atomic group obtained by removing one hydrogen atom from an aromatic hydrocarbon. The heteroaryl group is an atomic group obtained by removing one hydrogen atom from an aromatic heterocyclic ring. The alkyl group may be further substituted by an aryl group or heteroaryl group of 2 to 20 carbon atoms, and the aryl group or heteroaryl group may be further substituted by a linear, branched, or cyclic alkyl group of 1 to 22 carbon atoms.

Specific examples of the structural unit B1 include the following structures. Thereamong, structures derived from triarylamines, and structures derived from N-arylcarbazoles are preferred. The structural unit B1 illustrated below can be derived, for example, by using a compound having a halogen atom or triflate group at a bonding site "*", as a raw material monomer.

[Chemical Formula 12]

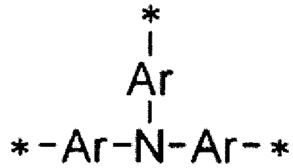

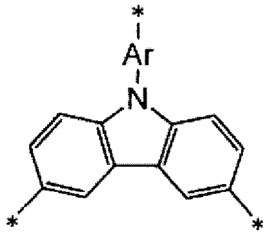

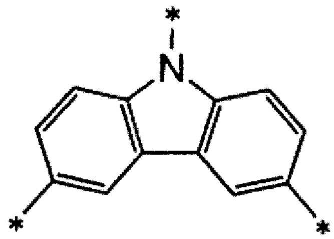

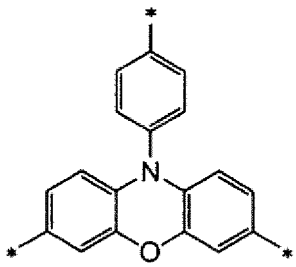

In the formula, Ar each independently represents a divalent linking group, for example, each independently represents an arylene group or heteroarylene group of 2 to 30 carbon atoms. Ar is preferably an arylene group, and more preferably a phenylene group. In the formula, * represents a bonding site with another structure.

In one embodiment, the structural unit B1 preferably includes at least one of a structural unit derived from a triphenylamine structure represented by formula (B1-1) below, or a structural unit derived from an N-phenylcarbazole structure represented by formula (B1-2) below. These structural units can be derived, for example, by using as a raw material monomer a compound having a halogen atom or triflate group at the bonding site "*" in the following structures.

[Chemical Formula 13]

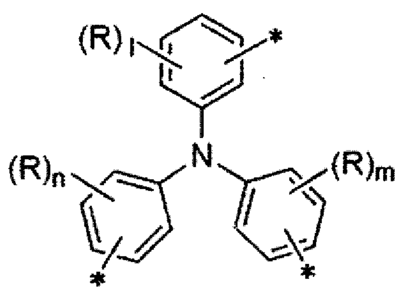

(B 1 − 1)

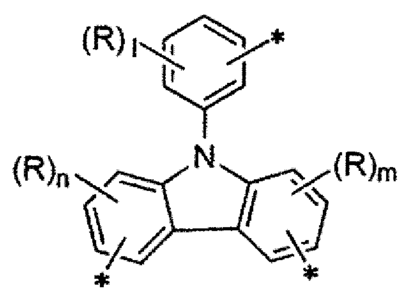

(B 1 − 2)

In the structural unit (B1-1), 1, m, and n are each independently an integer from 0 to 4, and each represents the number of substituents R. 1, m, and n are each independently an integer from 0 to 2, and more preferably an integer equal to 0 or 1. In one embodiment, the number of substituents in the structural unit (B1-1) is preferably 1 or 2. In another embodiment, the number of substituents in the structural unit (B1-1) is preferably 0.

In the structural unit (B1-2), 1 is an integer from 0 to 4, and m and n are each independently an integer from 0 to 3, indicating the number of substituents R, respectively. l is preferably an integer from 0 to 2, and more preferably an integer equal to 0 or 1. m and n are each independently an integer from 0 to 2, and more preferably an integer equal to 0 or 1. In one embodiment, the number of substituents in the structural unit (B1-2) is preferably 1 or 2. In another embodiment, the number of substituents in the structural unit (B1-2) is preferably 0.

In each of the structural units, "*" indicates a bonding site with another structure, and at least one of bonding sites bonds to a nitrogen atom (N). In the structural unit (B1-1) or (B1-2), it is preferable that two or three of the three bonding sites each bond to a nitrogen atom. It is more preferable that all of the three bonding sites each bond to a nitrogen atom. When a charge transport polymer includes an N-Ph bond, doping and conjugation are facilitated, and it tends to be easier to obtain better conductivity. From this viewpoint, it is preferable that the structural unit B include any one of the structural unit (B1-1) derived from triphenylamine, and the structural unit (B1-2) derived from N-phenylcarbazole. By including these structural

units, it is easier to obtain better conductivity.

In the structural units (B1-1) and (B1-2), the substituent R is the same as the substituent R described above for the structure represented by formula (I). In one embodiment, when the structural unit B has the structural unit (B1-1) or (B1-2), the substituent R may be a linear, branched, or cyclic alkyl group of 1 to 12 carbon atoms, or an aryl group of 6 to 12 carbon atoms. The aromatic ring in the aryl group may be further substituted with a linear, branched, or cyclic alkyl group of 1 to 12 carbon atoms. In another embodiment, both of the structural units (B1-1) and (B1-2) are preferably unsubstituted.

In one embodiment, the structural unit B may include a tetravalent or higher structural unit B2 in addition to the structural unit B1. For example, specific examples of the structural unit B2 include the following. Thereamong, a structure including a triarylamine structure, and a structure including a carbazole structure are preferred. The structural unit B2 can be derived, for example, by using as a raw material monomer a compound having a halogen atom or triflate group at the bonding site "*" of the following structure.

[Chemical Formula 14]

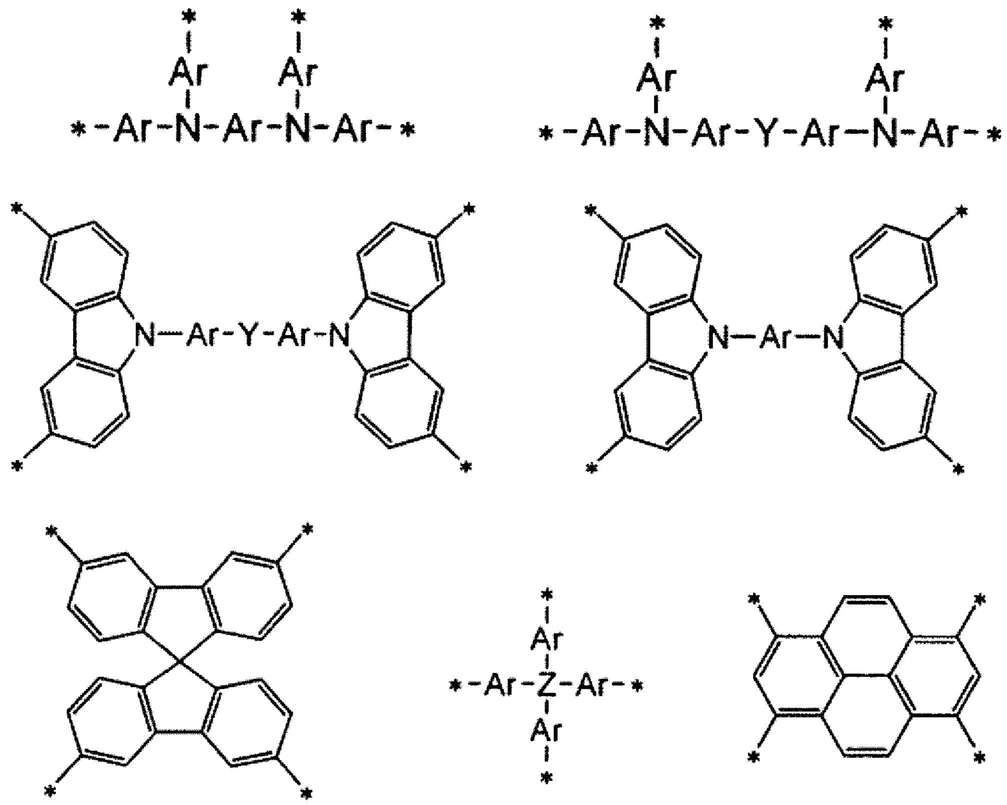

In the formulas, Ar independently represents an arylene group or heteroarylene group of 2 to 30 carbon atoms. Ar is preferably an arylene group, and more preferably a phenylene group. Y represents a divalent linking group, and an example thereof is a divalent group obtained by removing one additional hydrogen atom from a group having one or more hydrogen atoms among R (excluding groups including a polymerizable functional group) in a structural unit L described below. Z represents any one of a carbon atom, a silicon atom, and a phosphorus atom. In the structural unit, the benzene ring and Ar may have a substituent, and an example of the substituent is the substituent R in the structural unit B1 described above.

(Structural Unit L)

The structural unit L is a divalent structural unit having charge transport properties. There are no particular limitations on the structural unit L, as long as it includes an atomic group having charge transport ability. From the viewpoint of forming a structure represented by formula (I), by directly bonding to the structural unit (a) described above, the structural unit L includes at least a divalent structural unit represented by the above formula (b) (hereinafter also referred to as structural unit L1). The structural unit L1 can be derived by using an aromatic compound represented by formula (B1) below.

[Chemical Formula 15]

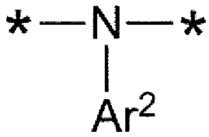

(b)

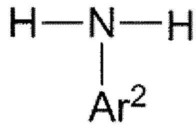

(B 1)

In the formulas, $Ar^2$ is a monovalent organic group derived from an aromatic hydrocarbon of 6 to 30 carbon atoms, and is an atomic group obtained by removing one hydrogen atom from an aromatic ring in the aromatic hydrocarbon. That is, $Ar^2$ is also called an aryl group. $Ar^2$ is an aryl group of 6 to 30 ring-forming carbon atoms, and has a structure where at least one hydrogen atom of an aromatic ring in the aryl group is substituted with an electron-withdrawing group or an electron-donating group. In the above $Ar^2$, the number of ring-forming carbon atoms is more preferably 6 to 24.

Specific examples of the aromatic hydrocarbon include benzene, naphthalene, anthracene, tetracene, fluorene, phenanthrene, biphenyl, terphenyl, and triphenylbenzene. Here, the aromatic ring in the aromatic hydrocarbon may have an electron-withdrawing group or an electron-donating group as one or more substituents, and may further have another substituent as necessary. The substituent may be the same as the substituent R described above.

In one embodiment, the above $Ar^2$ may have a structure represented by formula (b-1) below.

[Chemical Formula 16]

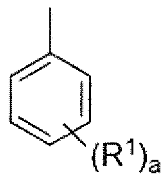

(b − 1)

In the formula, $R^1$ is an electron-withdrawing group, an electron-donating group, or an alkyl group of 1 to 12 carbon atoms, and a is an integer from 1 to 5. When a is 2 or more, $R^1$ groups may be all the same, or a combination of different groups. In one embodiment, a is preferably 1 to 4, more preferably 1 to 3, and even more preferably 1 or 2.

The above-mentioned "electron-withdrawing group" means a substituent that is more likely to attract an electron from a bonding atom side, compared with a hydrogen atom. The "electron-donating group" means a substituent that is more likely to donate an electron to a bonding atom side, compared with a hydrogen atom, and does not include an alkyl group. When a charge transport polymer includes a specific structure where a hydrogen atom in an aromatic ring bonded to an N atom is substituted with an electron-withdrawing group or an electron-donating group, a HOMO level tends to be easily adjusted.

For example, when an electron-withdrawing group is introduced into a specific portion of a charge transport polymer, as described above, the HOMO level can be deepened. When an electron-withdrawing group is introduced into a specific portion, solubility of the charge transport polymer tends to be improved. From this viewpoint, in one embodiment, in a branched polymer having a structure of formula (I), at least one hydrogen atom of the aromatic ring of $Ar^2$ is preferably substituted with an electron-withdrawing group.

The electron-withdrawing group is not particularly limited, and specific examples include a halogen group, a halogen-substituted alkyl group, a nitro group, a cyano group, a sulfonic acid group, and a sulfoxide group. More specifically, examples of the halogen group includes a fluoro group, a chloro group, a bromo group, and an iodine group. The number of carbon atoms of the alkyl group in a halogen-substituted alkyl group is preferably 1 to 6, more preferably 1 to 3, and even more preferably 1. From the viewpoint of electron-withdrawing strength, the halogen group is preferably a fluoro group, and the halogen-substituted alkyl group is preferably a fluoroalkyl group. In one embodiment, the fluoroalkyl group may be a perfluoroalkyl group.

In consideration of thermal stability of a charge transport polymer, the electron-withdrawing group is preferably at least one selected from the group consisting of a fluoro group, a fluoroalkyl group, a nitro group, a cyano group, a sulfonic acid group, and a sulfoxide group. More preferably, the electron-withdrawing group may be at least one selected from the group consisting of a fluoro group, a fluoroalkyl group, a sulfonic acid group, and a sulfoxide group. Even more preferably, the electron-withdrawing group may be at least one of a fluoro group or a fluoroalkyl group. When an aryl group includes multiple electron-withdrawing groups, the multiple electron-withdrawing groups may be the same or different from each other.

In one embodiment, $Ar^2$ in formula (I) preferably has a structure represented by formula (b-1a) or (b-1b) below.

[Chemical Formula 17]

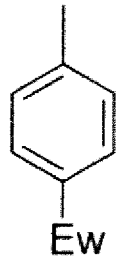

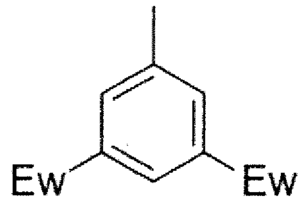

(b－1a) (b－1b)

In each formula, Ew represents an electron-withdrawing group. In the structure represented by the above formula (b-1a) or (b-1b), the electron-withdrawing group (Ew) is preferably a halogen atom or a halogen-substituted alkyl group. Particularly, a fluorine atom (F) or trifluoromethane ($CF_3$) is more preferable.

The electron-donating group is not particularly limited, but specific examples thereof include - OR, -OH, and -NRR'. The alkyl group of the alkyloxy group (-OR) may have any one of a linear, branched, or cyclic structure. The number of carbon atoms of the alkyl group may preferably be 1 to 8, more preferably 1 to 6, and even more preferably 1 to 4.

In one embodiment, $Ar^2$ in formula (I) preferably has a structure represented by formula (b-1c) or (b-1d) below.

[Chemical Formula 18]

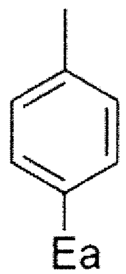

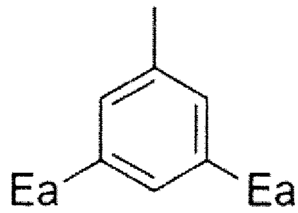

(b－1c) (b－1d)

In each formula, Ea represents an electron-donating group. In the structure represented by the above formula (b-1c) or (b-1d), the electron-donating group (Ea) is preferably -OR, and a methoxy group is particularly preferred.

As described above, a branched polymer having a structure represented by the above formula (I) includes at least one electron-withdrawing group or electron-donating group, as a substituent for an aromatic ring in $Ar^2$. In one embodiment, a branched polymer may further have an alkyl group of 1 to 12 carbon atoms, in addition to at least one electron-withdrawing group or electron-donating group, as the substituent.

The alkyl group of 1 to 12 carbon atoms may have any one of a linear, branched, or cyclic structure. In one embodiment, the alkyl group preferably has a linear or branched structure. In one embodiment, in consideration of application to a wet process, from the viewpoint of solubility in solvents, $R^1$ may preferably be an alkyl group of 2 to 12 carbon atoms, more preferably an alkyl group of 3 to 12 carbon atoms, and even more preferably an alkyl group of 4 to 12 carbon atoms.

In one embodiment, the structural unit L may further include, in addition to the structural unit L1, a structural unit L2 having a structure different from that of the structural unit L1. The structural unit L2 is selected from a substituted or unsubstituted aromatic tertiary amine structure (also called triarylamine structure), carbazole structure, thiophene structure, a bithiophene structure, fluorene structure, benzene structure, biphenylene structure, terphenylene structure, naphthalene structure, anthracene structure, tetracene structure, phenanthrene structure, dihydrophenanthrene structure, pyridine structure, pyrazine structure, quinoline structure, isoquinoline structure, quinoxaline structure, acridine structure, diazaphenanthrene structure, furan structure, pyrrole structure, oxazole structure, oxadiazole structure, thiazole structure, thiadiazole structure, triazole structure, benzothiophene structure, benzoxazole structure, benzoxadiazole structure, benzothiazole structure, benzothiadiazole structure, benzotriazole structure, N-arylphenoxazine structure, and a structure including one or more of these structures. The triarylamine structure is more preferably a triphenylamine structure.

In one embodiment, from the viewpoint of obtaining superior hole transport properties, the structural unit L2

preferably includes one or more structures selected from the group consisting of a substituted or unsubstituted triarylamine structure, carbazole structure, thiophene structure, bithiophene structure, benzene structure, fluorene structure, and pyrrole structure, and more preferably includes one or more structures selected from the group consisting of a substituted or unsubstituted triarylamine structure and carbazole structure. In another embodiment, from the viewpoint of obtaining superior electron transport properties, the structural unit L2 preferably includes one or more structures selected from the group consisting of a substituted or unsubstituted fluorene structure, benzene structure, phenanthrene structure, pyridine structure, and quinoline structure.

The structural unit L2 can be derived, for example, by using an aromatic compound illustrated below as a raw material monomer.

Q-L2-Q

In the formula, Q represents a halogen atom or a triflate group.

The structural unit L2 can also be derived, for example, by using an aromatic compound illustrated below as a raw material monomer.

Ar-NH-L2-NH-Ar

In the formula, Ar independently represents an aryl group or heteroaryl group of 2 to 30 carbon atoms.

Specific examples of the structural unit L2 include the following. However, the structural unit L2 is not limited to the following.

[Chemical Formula 19]

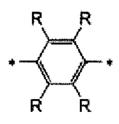 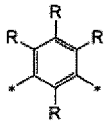 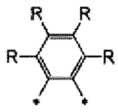 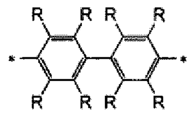 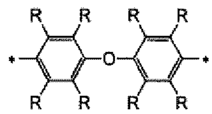

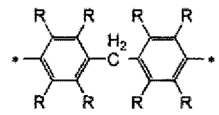 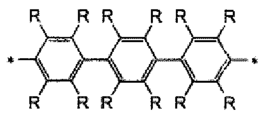 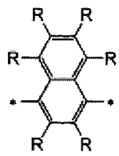 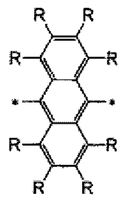

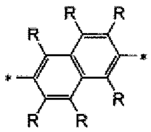 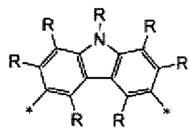 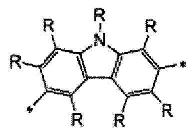 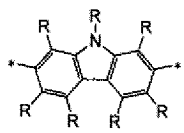

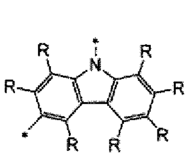 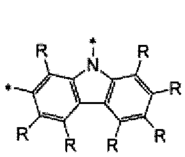 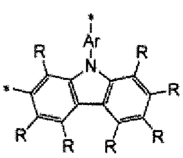 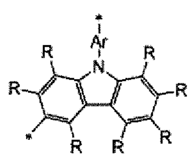

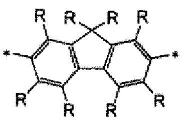 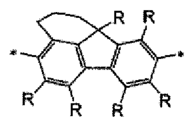 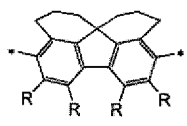 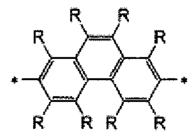

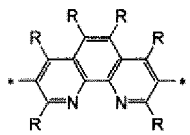 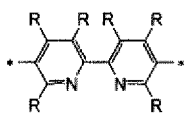 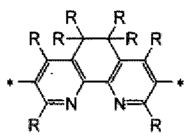 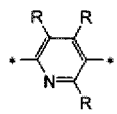

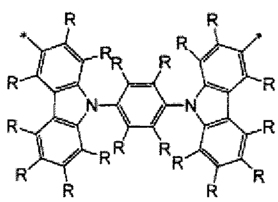 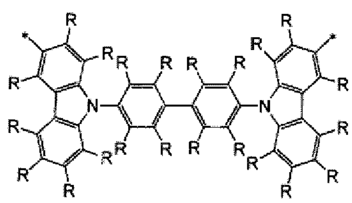

[Chemical Formula 20]

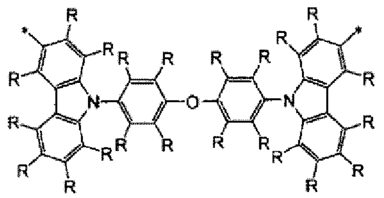
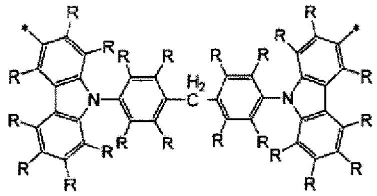
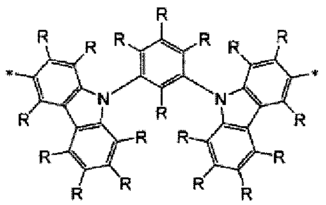
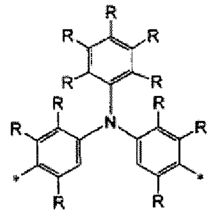
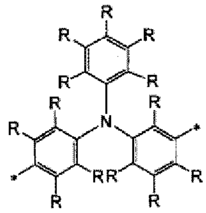
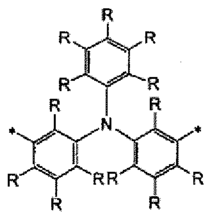
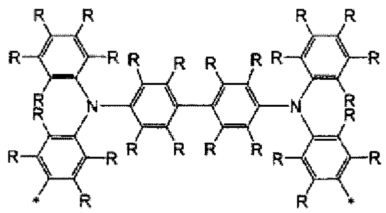
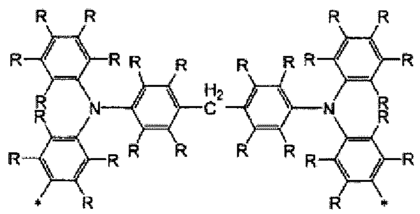
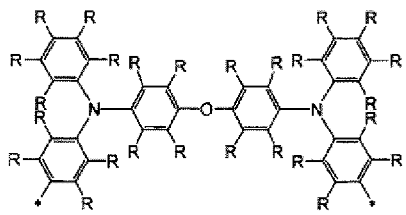
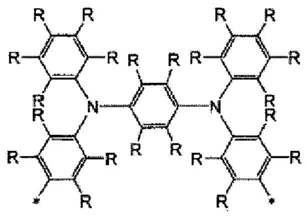
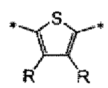
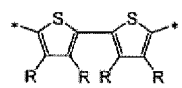
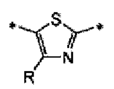
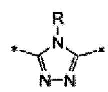
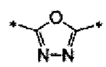
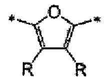
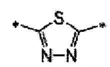
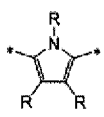
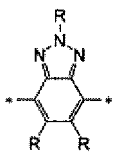
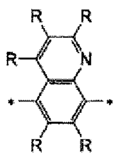
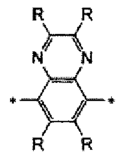
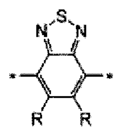
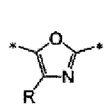
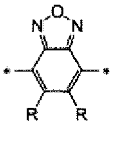
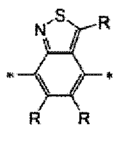
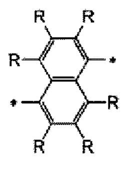

R each independently represents a hydrogen atom or a substituent. Preferably, each R is independently selected from the group consisting of $-R^1$, $-OR^2$, $-SR^3$, $-OCOR^4$, $-COOR^5$, $-SiR^6R^7R^8$, and a group including a polymerizable

functional group described below. $R^1$ to $R^8$ are each independently a hydrogen atom, a linear, cyclic, or branched alkyl group of 1 to 22 carbon atoms, or an aryl group or heteroaryl group of 2 to 30 carbon atoms. An aryl group is an atomic group obtained by removing one hydrogen atom from an aromatic hydrocarbon. A heteroaryl group is an atomic group obtained by removing one hydrogen atom from an aromatic heterocycle. The alkyl group may be further substituted with an aryl group or heteroaryl group of 2 to 20 carbon atoms, and the aryl group or heteroaryl group may be further substituted with a linear, cyclic, or branched alkyl group of 1 to 22 carbon atoms.

In one embodiment, R is preferably $-R^1$. Ar represents an arylene group or heteroarylene group of 2 to 30 carbon atoms. An arylene group is an atomic group obtained by removing two hydrogen atoms from an aromatic hydrocarbon. A heteroarylene group is an atomic group obtained by removing two hydrogen atoms from an aromatic heterocycle. Ar is preferably an arylene group, and more preferably a phenylene group.

Examples of the aromatic hydrocarbon include a monocyclic ring, a condensed ring, and a polycyclic ring where two or more rings selected from a monocyclic ring and a condensed ring are bonded together via a single bond. Examples of the aromatic heterocycle include a monocyclic ring, a condensed ring, and a polycyclic ring where two or more rings selected from a monocyclic ring and a condensed ring are bonded together via a single bond.

(Structural Unit T)

The structural unit T is a monovalent structural unit that configures a terminal portion of a charge transport polymer. The structural unit T is not particularly limited, and is selected from, for example, a substituted or unsubstituted aromatic hydrocarbon structure, aromatic heterocyclic structure, and a structure including one or more of these structures. In one embodiment, from the viewpoint of imparting durability without reducing charge transport properties, the structural unit T is preferably a substituted or unsubstituted aromatic hydrocarbon structure, and more preferably a substituted or unsubstituted benzene structure. Except for the valence, the structural unit T may have the same structure as the structural unit L. In one embodiment, from the viewpoint of imparting durability without reducing charge transport properties, the structural unit T is preferably a substituted or unsubstituted aromatic hydrocarbon structure, and more preferably a substituted or unsubstituted benzene structure.

Specific examples of the structural unit T include the following. However, the structural unit T is not limited to the following. The structural unit T can be derived, for example, by using as a raw material monomer an aromatic compound having a halogen atom or triflate group at the bonding site "*" in the following structure.

[Chemical Formula 21]

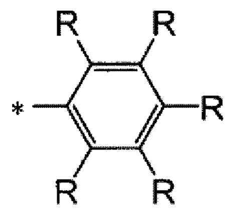

R each independently represents a hydrogen atom or a substituent. The substituent R is selected from the group consisting of $-R^1$, $-OR^2$, $-SR^3$, $-OCOR^4$, $-COOR^5$, $-SiR^6R^7R^8$, and a polymerizable functional group described below. $R^1$ to $R^8$ are the same as $R^1$ to $R^8$ in the structural unit L. In the above structure, the number of substituents may be an integer from 0 to 5, preferably from 1 to 3, and more preferably 1 or 2. The substituent is preferably at least one of $-R^1$ or a polymerizable functional group described below. $R^1$ may preferably be an alkyl group of 1 to 8 carbon atoms, more preferably an alkyl group of 1 to 7 carbon atoms, and even more preferably an alkyl group of 1 to 6 carbon atoms. The alkyl group may have any one of a linear, cyclic, or branched structure.

(Polymerizable Functional Groups)

In an embodiment, a branched polymer may have a polymerizable functional group in the molecule. The polymerizable functional group is a functional group that can form bonds when heat and/or light is applied. When a charge transport polymer includes a polymerizable functional group, an organic layer made from a cured film can be formed by curing a coating film formed using the charge transport polymer. Such an organic layer made from a cured film has solvent resistance necessary for laminating an upper layer on the organic layer through a wet process. Thus, when the charge transport polymer includes a polymerizable functional group, multilayering through a wet process becomes easy.

Examples of the polymerizable functional group include groups having a carbon-carbon multiple bond (such as a vinyl group, allyl group, butenyl group, ethynyl group, acryloyl group, acryloyloxy group, acryloylamino group, methacryloyl group, methacryloyloxy group, methacryloylamino group, vinyloxy group and vinylamino group), groups having a small ring (including cyclic alkyl groups such as a cyclopropyl group and cyclobutyl group; cyclic ether groups such as an epoxy group (oxiranyl group) and oxetane group (oxetanyl group); cyclic thioether group such as episulfide groups; cyclic ester groups such as diketene groups and lactone groups; cyclic amide groups such as lactam groups), heterocyclic groups (for example, a furanyl group, pyrrolyl group, thiophenyl group and silolyl group); and benzocyclobutene groups.

The polymerizable functional group preferably includes at least one selected from the group consisting of a group having a carbon-carbon multiple bond, a group having a small ring, and a heterocyclic group, and more preferably includes at least one selected from the group consisting of a group having a carbon-carbon double bond, a cyclic ether group, and a heterocyclic group. Specifically, the polymerizable functional group is preferably a vinyl group, an acryloyl group, a methacryloyl group, an epoxy group, an oxetane group, a pyrrolyl group, or a thiophenyl group, and is more preferably a vinyl group, an oxetane group, or a thiophenyl group from the viewpoint of solubility and curability of the charge transport polymer. The polymerizable functional group may be a substituted or unsubstituted polymerizable functional group. Substituents which the polymerizable functional group can have include, for example, an alkyl group of 1 to 6 carbon atoms, such as a methyl group and an ethyl group.

The polymerizable functional group may be bonded to an aromatic ring directly, or bonded to an aromatic ring via a divalent group, such as a linking group. That is, in one embodiment, the charge transport polymer may further have a monovalent structural unit represented by formula (c) below.

$$-Ar^3-(X)a-(Y)b-Z \qquad (c)$$

In the formula, $Ar^3$ represents a divalent organic group derived from an aromatic hydrocarbon or aromatic heterocycle, having 2 to 30 carbon atoms, X represents a linking group, Y represents an aliphatic hydrocarbon group of 1 to 10 carbon atoms, Z represents a substituted or unsubstituted polymerizable functional group, and a and b are each independently 0 or 1.

In formula (c), X may be at least one linking group selected from the group consisting of the following formulas (x1) to (x10). In one embodiment, the linking group X is preferably x1.

[Chemical Formula 22]

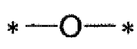
(X 1)

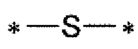
(X 2)

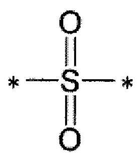
(X 3)

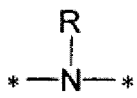
(X 4)

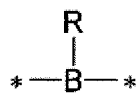
(X 5)

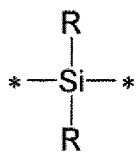
(X 6)

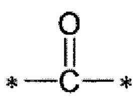
(X 7)

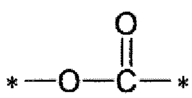
(X 8)

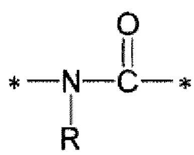
(X 9)

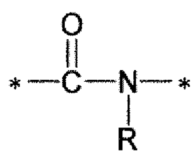
(X 10)

In the above formulas, R independently represents a hydrogen atom, a linear, branched, or cyclic alkyl group of 1 to 22 carbon atoms, or an aryl group or heteroaryl group of 2 to 30 carbon atoms. In one embodiment, R is preferably a linear, branched, or cyclic alkyl group of 1 to 22 carbon atoms. The number of carbon atoms is more preferably from 2 to 16, even more preferably from 3 to 12, and particularly preferably from 4 to 8. In another embodiment, R is preferably an aryl group of 6 to 30 carbon atoms, more preferably a phenyl group, or a naphthyl group, and even more preferably a phenyl group.

In the above formula (c), Y represents a divalent aliphatic hydrocarbon group of 1 to 10 carbon atoms. The aliphatic hydrocarbon group may be a linear, branched, or cyclic structure, or may have a combination of these structures. The aliphatic hydrocarbon group may be saturated or unsaturated.

In one embodiment, Y is preferably an aliphatic hydrocarbon group having a linear structure from the viewpoint of easy availability of a monomer as a raw material, and is more preferably saturated. From these viewpoints, in formula (c), Y is preferably $-(CH_2)_n-$, where n is from 1 to 10. n may be preferably from 1 to 8, and more preferably from 1 to 6. From the

viewpoint of heat resistance, n is even more preferably from 1 to 4, and is most preferably 1 or 2.

From the above viewpoints, in one embodiment, the charge transport polymer preferably has a structural region represented by formula (c1) below.

$$-Ar^3-(O)a-(CH_2)_n-Z \qquad (c1)$$

In the formular, $Ar^3$ represents an aromatic hydrocarbon of 2 to 30 carbon atoms, or a divalent organic group derived from an aromatic heterocycle, Z represents a substituted or unsubstituted polymerizable functional group, a is 0 or 1, and n is an integer from 0 to 10.

In one embodiment, the charge transport polymer preferably has a structural region represented by at least one of the following formulas (c-1) or (c-2).

$$-Ar-Z \qquad (c-1)$$

$$-Ar-O-(CH_2)_n-Z \qquad (c-2)$$

In the formulas, Ar represents a substituted or unsubstituted arylene group or heteroarylene group of 2 to 30 carbon atoms, Z represents a substituted or unsubstituted polymerizable functional group, and n is an integer from 1 to 10. Details of each are as described above.

Although not particularly limited, Z is preferably an allyl group in the above formula (c-1). From the viewpoint of storage stability, Z is preferably an oxetane group represented by formula (z1) below, in the above formula (c-2). In the formulas, R may be a hydrogen atom, or a saturated alkyl group of 1 to 4 carbon atoms. R is particularly preferably a methyl group or an ethyl group.

[Chemical Formula 23]

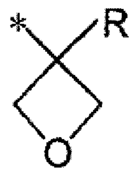

(z 1)

The charge transport polymer having at least one structural region represented by the above formula (c) includes at least one polymerizable functional group Z in its structure. The compound including the polymerizable functional group can be cured through a polymerization reaction, and its solubility in a solvent can be changed by curing. Thus, the organic electronics material according to the present embodiment configured with using a charge transport polymer having a polymerizable functional group has excellent curability and is suitable for a wet process.

When the charge transport polymer has a polymerizable functional group, a structural region represented by the above formula (c) may be included in at least one of the above structural units B, L, or T, which configures the polymer, and there are no particular limitations on the position at which the structural region is introduced. In a preferred embodiment, from the viewpoint of improving the curability, the structural region represented by the above formula (c) preferably exists in a structural unit T that configures at least one terminal portion of the charge transport polymer. The structural region represented by the above formula (c) is preferably present in the structural unit T, which configures a terminal portion, also from the viewpoint of ease of synthesis of monomer compounds used for forming the charge transport polymer.

From the above viewpoints, in one embodiment, a charge transport polymer preferably includes, as the structural unit T, a structural unit T1 having a structure represented by formula (c) below. The structural unit T1 can be derived, for example, by using an aromatic compound represented by formula (C1) below as the aromatic compound (C) of an aromatic compound of a raw material monomer described in the production method according to the present embodiment.

$$*-Ar^3-(X)a-(Y)b-Z \qquad (c)$$

$$Q-Ar^3-(X)a-(Y)b-Z \qquad (C1)$$

In each formula, $Ar^3$, X, Y, Z, a, and b are as described above. * represents a bonding site with another structure. Q represents a halogen atom or a triflate group. Q is preferably a halogen atom, and in particular, a bromine atom is preferred.

In one embodiment, the structural unit T1 preferably includes a structural unit represented by formula (T1-1)

below, and a structural unit represented by formula (T1 -2) below. In the formular, Ph is a phenyl group, Z is a polymerizable functional group, and n is an integer from 1 to 10.

-Ph-Z (T1-1)

$-Ph-O-(CH_2)_n-Z$ (T1-2)

In one embodiment, a charge transport polymer may further include a structural unit T2 having a structure different from that of the structural unit T1, preferably a structure not including a polymerizable functional group, in addition to the structural unit T1.

In a charge transport polymer, a polymerizable functional group is preferably introduced into at least a terminal portion (i.e., structural unit T) of the charge transport polymer. A polymerizable functional group may be introduced into a portion other than the terminal portion (i.e., structural unit L or B), or may be introduced into both the terminal portion and the portion other than the terminal portion. It is preferable that a polymerizable functional group be introduced into only the terminal portion from the viewpoint of achieving both curability and charge transport properties. In a charge transport polymer having a branched structure, a polymerizable functional group may be introduced into a main chain, a side chain, or both the main chain and the side chain of the charge transport polymer.

For example, from the viewpoint of obtaining a sufficient change in solubility, the number of polymerizable functional groups per one molecule of a charge transport polymer is preferably two or more, and more preferably three or more. From the viewpoint of maintaining charge transport properties, the number of polymerizable functional groups is preferably 1,000 or less, and more preferably 500 or less.

From the viewpoint of obtaining favorable curability, the proportion of a polymerizable functional group in a charge transport polymer is preferably 0.1% by mole or more, more preferably 1% by mole or more, and even more preferably 3% by mole or more, relative to total of all the structural units. From the viewpoint of obtaining favorable charge transport properties, the proportion of the polymerizable functional group is preferably 70% by mole or less, more preferably 60% by mole or less, and even more preferably 50% by mole or less. Note that the "proportion of a polymerizable functional group" here means a proportion of a structural unit having a polymerizable functional group.

The content and proportion of a polymerizable functional group per one molecule of a charge transport polymer can be obtained as an average value by using an amount added (for example, an amount added of a monomer having a polymerizable functional group $\times$ the number of polymerizable functional groups per monomer) of a polymerizable functional group, an amount added of a monomer corresponding to each structural unit, a mass average molecular weight of the charge transport polymer, and the like, which were used to synthesize the charge transport polymer. The content of a polymerizable functional group can be calculated as an average value by using a ratio of an integral value of a signal derived from the polymerizable functional group to an integral value of the entire spectrum in a $^1H$ NMR (nuclear magnetic resonance) spectrum of a charge transport polymer, a mass average molecular weight of the charge transport polymer, and the like. For simplicity, when amounts added are clear, a value obtained using the amounts added is preferably employed.

(Number Average Molecular Weight)

The number average molecular weight of a charge transport polymer can be adjusted appropriately in consideration of solubility in solvents, film formability, and the like. From the viewpoint of ensuring superior charge transport properties, the number average molecular weight is preferably 500 or more, more preferably 1,000 or more, even more preferably 2,000 or more, and still more preferably 5,000 or more. From the viewpoints of maintaining favorable solubility in solvents and facilitating preparation of ink compositions, the number average molecular weight is preferably 1,000,000 or less, more preferably 100,000 or less, even more preferably 50,000 or less, and still more preferably 30,000 or less.

(Weight Average Molecular Weight)

The weight average molecular weight of a charge transport polymer can be adjusted appropriately in consideration of solubility in solvents, film formability, and the like. From the viewpoint of ensuring superior charge transport properties, the weight average molecular weight is preferably 1,000 or more, more preferably 5,000 or more, even more preferably 10,000 or more, and still more preferably 30,000 or more. From the viewpoints of maintaining favorable solubility in solvents and facilitating preparation of ink compositions, the mass average molecular weight is preferably 1,000,000 or less, more preferably 700,000 or less, even more preferably 400,000 or less, and still more preferably 200,000 or less and 100,000 or less in this order.

In one embodiment, the weight average molecular weight of a charge transport polymer may be within a range

from 2,000 to 500,000, preferably from 3,000 to 100,000, even more preferably from 8,000 to 50,000.

The number average molecular weight and the mass average molecular weight can be measured with gel permeation chromatography (GPC), using a calibration curve of standard polystyrenes.

(Proportions of Structural Units)

From the viewpoint of improving durability of organic electronics elements, the proportion of the structural unit B included in a charge transport polymer is, relative to the total of all the structural units, preferably 1% by mole or more, more preferably 5% by mole or more, and even more preferably 10% by mole or more. From the viewpoint of controlling viscosity increase and achieving favorable synthesis of a charge transport polymer, or from the viewpoint of obtaining sufficient charge transport properties, the proportion of the structural unit B is preferably 50% by mole or less, more preferably 40% by mole or less, and even more preferably 30% by mole or less. Here, the above proportion of the structural unit B means the total amount of the structural units B1 and B2. In one embodiment, the structural unit B may include only the structural unit B1.

In a charge transport polymer, the proportion of the structural unit L is, relative to the total of all the structural units, preferably 10% by mole or more, more preferably 20% by mole or more, and even more preferably 30% by mole or more, from the viewpoint of obtaining sufficient charge transport properties. The proportion of the structural unit L is preferably 97% by mole or less, more preferably 92% by mole or less, and even more preferably 85% by mole or less, in consideration of the structural unit T and the structural unit B. Here, the proportion of the structural unit L means the total amount of the structural units L1 and L2. In one embodiment, the structural unit L may include only the structural unit L1.

From the viewpoint of solubility and curability, the proportion of the structural unit T included in a charge transport polymer is, relative to the total of all the structural units, preferably 3% by mole or more, more preferably 8% by mole or more, and even more preferably 15% by mole or more. The above ranges are also preferable from the viewpoint of improving properties of an organic electronics element, or from the viewpoint of controlling viscosity increase and achieving favorable synthesis of a charge transport polymer. From the viewpoint of obtaining sufficient charge transport properties, the proportion of the structural unit T is preferably 60% by mole or less, more preferably 55% by mole or less, and even more preferably 50% by mole or less.

In consideration of the balance of charge transport properties, durability, productivity, and the like, the ratio (molar ratio) of the structural unit L, the structural unit T, and the structural unit B is preferably L : T: B = 100 : (10 to 200) : (10 to 100), more preferably 100 : (20 to 180) : (20 to 90), and even more preferably 100 : (40 to 160) : (30 to 80).

The ratio of structural units can be determined from amounts added of monomers corresponding to the structural units used for synthesis of a charge transport polymer. The ratio of structural units can also be calculated as an average value using integral values of spectra derived from each structural unit in the $^1$H-NMR spectrum of a charge transport polymer. For simplicity, when amounts added are clear, a value obtained using the amounts added is preferably employed. The ratio of the terminal group described above can also be obtained in the same manner.

From the viewpoint of stabilizing film quality of a coating film, the degree of polymerization (the number of structural units) of a charge transport polymer is preferably 5 or more, more preferably 10 or more, and even more preferably 20 or more. From the viewpoint of solubility in solvents, the degree of polymerization is preferably 1,000 or less, more preferably 700 or less, and even more preferably 500 or less. The degree of polymerization can be calculated as an average value using a mass average molecular weight of a charge transport polymer, a molecular weight of a structural unit, and a ratio of a structural unit.

The charge transport polymer according to the above embodiment may have a structure where the structural unit B is bonded via at least the structural unit L1, and may further optionally have a structure where the structural unit L2 and the structural unit T are bonded, whereby a charge transport polymer including an N-Ph bond in the molecule is formed by the structural unit L1. The charge transport polymer including an N-Ph bond tends to be more easily doped and conjugated than, for example, a charge transport polymer including a Ph-Ph bond formed using a Suzuki-Miyaura coupling method. From this viewpoint, in one embodiment, the charge transport polymer preferably has a partial structure represented by formula (i) below.

[Chemical Formula 24]

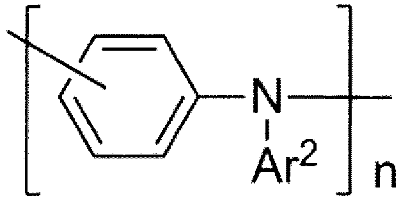

(i)

From the viewpoint that a partial structure represented by the above formula (i) can be easily introduced, the structural unit B1 and the structural unit L2 preferably include either a structure derived from a triphenylamine structure, or a structure derived from an N-phenylcarbazole structure.

In the above formula (i), n is an integer of 2 or more, and * represents a bonding site with another structure, and is preferably bonded to a phenyl group. In one embodiment, n is preferably an integer of 3 or more, more preferably an integer of 4 or more, and even more preferably an integer of 6 or more. Meanwhile, n is preferably an integer of 3,000 or less, more preferably an integer of 1,500 or less, and even more preferably an integer of 500 or less.

From the viewpoint of easily introducing a partial structure represented by the above formula (i), the structural unit B1 and the optionally introduced structural unit L2 each preferably include either a structure derived from a triphenylamine structure, or a structure derived from an N-phenylcarbazole structure.

In the charge transport polymer, the content of an N-Ph bond formed by bonding between structural units may preferably be within a range from 10% to 80%, more preferably from 20% to 70%, and even more preferably from 30% to 60%. Here, the content is a value calculated from the amount added of a raw material monomer by performing NMR measurement, similar to the ratio of structural units.

In the production method according to the above embodiment, it is possible to produce a branched polymer including a structural unit derived from each compound by using, as a raw material monomer, at least an aromatic compound (A1) having three halogen atoms or triflate groups directly bonded to an aromatic ring, and an aromatic compound (B1) having a primary amino group. The structure of the aromatic compound (A1) is represented by formula A1 below, and the structure of the aromatic compound (B1) is represented by formula B1 below.

[Chemical Formula 25]

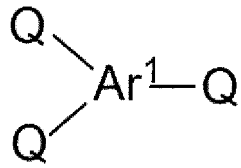

(A1)

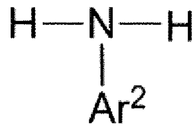

(B1)

In the formula, $Ar^1$ and $Ar^2$ are as described above. Q represents a halogen atom or a triflate group. Q is preferably a halogen atom, and in particular, a bromine atom is preferable.

A branched polymer having two or more structures represented by formula (IA) below can be easily obtained by selecting an aromatic compound to be used as a raw material monomer.

[Chemical Formula 26]

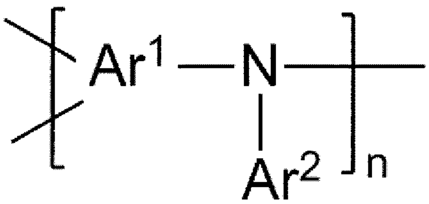

(IA)

In the formula, $Ar^1$ and $Ar^2$ are as described above. n is an integer of 2 or more. n may preferably be 3 or more, more preferably 5 or more, and even more preferably 10 or more. For example, n may be an integer appropriately set such that the weight average molecular weight (Mw) of the branched polymer is within a range from 1,000 or more to 500,000 or

less, from 2,000 or more to 500,000 or less, from 3,000 or more to 500,000 or less, or from 5,000 or more to 300,000 or less.

In the production method according to the above embodiment, the raw material monomer preferably further includes an aromatic compound (C) having one halogen atom or triflate group directly bonded to an aromatic ring. In one embodiment, from the viewpoint of configuring a branched polymer having a polymerizable functional group, the raw material monomer preferably further includes an aromatic compound represented by formula (C1) below.

$$Q\text{-}Ar^3\text{-}(X)a\text{-}(Y)b\text{-}Z \qquad (C1)$$

In each formula, $Ar^3$, X, Y, Z, a, and b are as described above. Q represents a halogen atom or a triflate group. Q is preferably a halogen atom, and in particular, a bromine atom is preferable.

In one embodiment, a branched polymer includes the structural units B1, L1, and T. Here, the structural unit T may be T1 and/or T2. In another embodiment, a branched polymer may further include the structural unit B2 and/or the structural unit L2 in addition to the structural units B1, L1, and T. Here, an aromatic compound can be used, as a raw material monomer, which has a structure capable of inducing an additional structural unit and having a halogen atom or triflate group directly bonded to an aromatic ring. Similarly, an aromatic compound can be used, as a raw material monomer, which has two secondary amino groups in the molecule. Thus, by optionally combining raw material monomers, a charge transport polymer having a desired structure can be easily obtained.

For example, in one embodiment, a raw material monomer usable for producing a polymer including the structural units B1, L1, and T may include the aromatic compounds (A1), (B1), and (C). In one embodiment, a raw material monomer may be a mixture including only the aromatic compounds (A1), (B1), and (C). When the mixture is used as a raw material monomer, it is possible to easily form a polymer having a structure of $-(NAr\text{-}Ph)_n-$ (n is an integer of 2 or more) without forming a Ph-Ph bond in the molecule. In one embodiment, the aromatic compound (C) preferably includes the aromatic compound (C1).

In another embodiment, a polymer may further include the structural units B2 and/or L2. When these structural units are introduced, a raw material monomer may further include an aromatic compound having a halogen atom or triflate group at a bonding site of these structural units. In another embodiment, in order to introduce the structural unit L2 into the polymer, a compound having a -NH-Ar group at each bonding site (*) in the structural unit L2 as represented by a formula below can be used.

Ar-NH-L2-NH-Ar

In the formula, Ar independently represents an aryl group or heteroaryl group of 2 to 30 carbon atoms.

In the production method according to the above embodiment, since an arylamine polymer can be synthesized using the Buchwald-Hartwig reaction, and separation and purification can be performed satisfactorily, a polymer having little impurities can be obtained. The obtained polymer can be suitably used as an organic electronics material. Hereinafter, representative embodiments using an arylamine polymer will be described.

One embodiment relates to an organic electronics material including the arylamine polymer as a charge transport polymer. The content of the charge transport polymer in an organic electronics material may be preferably 50% by mass or more, more preferably 70% by mass or more, and even more preferably 80% by mass or more, relative to the total mass of the organic electronics material. When the content of the charge transport polymer is adjusted within the above ranges, excellent charge transport properties can be easily obtained. In one embodiment, the content of the charge transport polymer may be 100% by mass.

(Dopant)

In one embodiment, from the viewpoint of improving charge transport properties of an organic electronics material, an additive, such as a dopant, may be added. When an additive, such as a dopant, is used, the content of the charge transport polymer relative to the total mass of the organic electronics material may be 95% by mass or less, or may be 90% by mass or less.

The content of the dopant is, relative to the total mass of the organic electronics material, preferably 0.01% by mass or more, more preferably 0.1% by mass or more, and even more preferably 0.5% by mass or more. From the viewpoint of maintaining favorable film forming properties, the content of the dopant is, relative to the total mass of the organic electronics material, preferably 50% by mass or less, more preferably 30% by mass or less, and even more preferably 20% by mass or less.

From the viewpoint of applying a wet process as a film forming method, the organic electronics material preferably further includes a solvent. The organic electronics material may be configured as an ink composition (polymer solution) including a charge transport polymer and a solvent. The solvent to be used needs only to be capable of dissolving the charge transport polymer. By using the ink composition where the charge transport polymer is dissolved in the solvent,

an organic layer can be easily formed using a simple method such as a wet process.

(Solvent)

As the solvent, any solvent, such as water, an organic solvent, or a mixed solvent thereof can be used. Examples of the organic solvent include: alcohols such as methanol, ethanol, and isopropyl alcohol; alkanes such as pentane, hexane, and octane; cyclic alkanes such as cyclohexane; aromatic hydrocarbons such as benzene, toluene, xylene, mesitylene, tetralin, and diphenylmethane; aliphatic ethers such as ethylene glycol dimethyl ether, ethylene glycol diethyl ether, and propylene glycol-1-monomethyl ether acetate; aromatic ethers such as 1,2-dimethoxybenzene, 1,3-dimethoxybenzene, anisole, phenethol, 2-methoxytoluene, 3-methoxytoluene, 4-methoxytoluene, 3-phenoxytoluene, 2,3-dimethylanisole, and 2,4-dimethylanisole; aliphatic esters such as ethyl acetate, n-butyl acetate, ethyl lactate, and n-butyl lactate; aromatic esters such as phenyl acetate, phenyl propionate, methyl benzoate, ethyl benzoate, propyl benzoate, and n-butyl benzoate; amides such as N,N-dimethylformamide and N,N-dimethylacetamide; dimethyl sulfoxide, tetrahydrofuran, acetone, chloroform, and methylene chloride. Aromatic hydrocarbons, aliphatic esters, aromatic esters, aliphatic ethers, and aromatic ethers are preferable, and aromatic hydrocarbons are more preferable.

The content of the solvent in the organic electronics material (ink composition) can be determined in consideration of application to various coating methods. For example, the content of the solvent is preferably an amount such that the proportion of the charge transport polymer relative to the solvent is 0.1% by mass or more, more preferably 0.2% by mass or more, and even more preferably 0.5% by mass or more. The content of the solvent is preferably an amount such that the proportion of the charge transport polymer relative to the solvent is preferably 20% by mass or less, more preferably 15% by mass or less, and even more preferably 10% by mass or less.

In another embodiment, an organic electronics material may include an additive as an optional component from the viewpoint of improving workability in forming an organic layer as an ink composition and further improving function of the organic layer. Examples of the additive include a polymerization inhibitor, a stabilizer, a thickener, a gelling agent, a flame retardant, an antioxidant, a reduction inhibitor, an oxidizing agent, a reducing agent, a surface modifier, an emulsifier, an antifoaming agent, a dispersant, and a surfactant.

<Organic Layer>

One embodiment of the present invention relates to an organic layer formed using the above-described organic electronics material or ink composition. The organic layer exhibits favorable charge transport properties. By using the ink composition, the organic layer can be formed favorably and easily using a coating method. Examples of the coating method include conventional methods such as spin coating methods, casting methods, dipping methods, plate-based printing methods such as relief printing, intaglio printing, offset printing, lithographic printing, relief reversal offset printing, screen printing, and gravure printing, and plateless printing methods such as inkjet methods. When the organic layer is formed using the coating method, a coating layer obtained after coating may be dried through heat treatment to remove the solvent.

The heat treatment can be conducted under the atmosphere or an inert gas atmosphere. Examples of the inert gas include helium gas, argon gas, nitrogen gas, and a mixed gas thereof. The "inert gas atmosphere" is an atmosphere where the concentration of the inert gas is, in volume ratio, preferably 99.5% or more, more preferably 99.9% or more, and even more preferably 99.99% or more by volume.

Heat treatment can be conducted using a heater, such as a hot plate or an oven, for example. In order to conduct heat treatment under an inert gas atmosphere, for example, a hot plate is used under an inert gas atmosphere, or an inert gas atmosphere is created inside an oven.

Heat treatment is preferably conducted at a temperature equal to or higher than the boiling point of a solvent from the viewpoint of efficiently removing the solvent. When a polymerization reaction of a charge transport polymer is conducted, a temperature where the polymerization reaction proceeds efficiently is preferable. In one embodiment, temperature of heat treatment is preferably 140°C or higher, more preferably 180°C or higher, and even more preferably 190°C or higher. From the viewpoint of controlling deterioration due to heat treatment, the temperature is preferably 300°C or lower, more preferably 280°C or lower, and even more preferably 250°C or lower.

From the viewpoint of improving efficiency of charge transport, thickness of the organic layer obtained after drying is preferably 0.1 nm or more, more preferably 1 nm or more, and even more preferably 3 nm or more. From the viewpoint of reducing electrical resistance, thickness of the organic layer is preferably 300 nm or less, more preferably 200 nm or less, and even more preferably 100 nm or less.

<Organic electronics element>

One embodiment of the present invention relates to an organic electronics element having at least one organic

layer described above. Examples of the organic electronics element include an organic EL element, an organic photoelectric conversion element, and an organic transistor. The organic electronics element preferably has a structure where an organic layer is disposed between at least a pair of electrodes. The organic electronics element can be produced using a producing method including forming an organic layer using the organic electronics material or the ink composition.

<Organic EL Element>

One embodiment relates to an organic EL element. The organic EL element has at least one organic layer described above. The organic EL element typically includes a light emitting layer, an anode, a cathode, and a substrate, and optionally includes other functional layers such as a hole injection layer, an electron injection layer, a hole transport layer, and an electron transport layer. Each layer may be formed through a vapor deposition method, or a coating method. The organic EL element preferably includes the organic layer as a light emitting layer or another functional layer, more preferably as another functional layer, and even more preferably as at least one of a hole injection layer or a hole transport layer.

FIG. 1 is a cross-sectional schematic view illustrating an embodiment of an organic EL element. The organic EL element in FIG. 1 is an element with a multilayer structure, and has a substrate 8, an anode 2, a hole injection layer 3, a hole transport layer 6, a light emitting layer 1, an electron transport layer 7, an electron injection layer 5, and a cathode 4 provided in this order.

[Light-Emitting Layer]

Examples of materials that can be used for the light emitting layer include small molecular weight compounds, polymers, and dendrimers. Polymers are preferably because they have high solubility in solvents and are suitable for coating methods. Examples of light emitting materials include fluorescent materials, phosphorescent materials, and thermally activated delayed fluorescent materials (TADF).

Specific examples of the fluorescent materials include small molecular weight compounds such as perylene, coumarin, rubrene, quinacridone, stilbene, color laser dyes, aluminum complexes, and derivatives of thereof; polymers such as polyfluorene, polyphenylene, polyphenylenevinylene, polyvinylcarbazole, fluorene-benzothiadiazole copolymers, fluorene-triphenylamine copolymers, and derivatives thereof; and mixtures thereof.

Examples of materials that can be used as the phosphorescent materials include metal complexes and the like including a metal such as Ir or Pt. Specific examples of Ir complexes include FIr(pic) (iridium(III) bis[(4,6-difluorophenyl)-pyridinato-N,$C^2$]picolinate) which emits blue light, $Ir(ppy)_3$ (fac-tris(2-phenylpyridine)iridium) which emits green light, and $(btp)_2Ir(acac)$ (bis[2-(2'-benzo[4,5-$\alpha$]thienyl)pyridinato-N,$C^3$]iridium(acetyl-acetonate)) and $Ir(piq)_3$ (tris(1-phenylisoquinoline)iridium) which emit red light. Specific examples of Pt complexes include PtOEP (2,3,7,8,12,13,17,18-octaethyl-21H,23H-forphine-platinum), which emits red light.

When the light emitting layer includes a phosphorescent material, a host material is preferably also included in addition to the phosphorescent material. As the host material, small molecular weight compounds, polymers, and dendrimers can be used. Examples of the small molecular weight compounds include CBP(4,4'-bis(9H-carbazol-9-yl) biphenyl), mCP(1,3-bis(9-carbazolyl)benzene), CDBP(4,4'-bis(carbazol-9-yl)-2,2'-dimethylbiphenyl), and derivatives thereof, whereas examples of the polymers include the above-described organic electronics materials, polyvinylcarbazole, polyphenylene, polyfluorene, and derivatives thereof.

Examples of thermally active delayed fluorescent materials include compounds such as PIC-TRZ(2-biphenyl-4,6-bis(12-phenylindolo[2,3-a]carbazol-11-yl)-1,3,5-triazine), Spiro-CN(2',7'-bis(diP-tolylamino)-9,9'-spirobifluorene-s,7-dicarbonitrile), CC2TA(2,4-bis{3-(9H-carbazol-9-yl)-9H-carbazol-9-yl}-6-phenyl-1,3,5-triazine), CZ-PS(9,9'-(4,4'-sulfonylbis(4,1-phenylene))bis(3,6-di-tert-butyl-9H-carbazole)), 4CzPN(3,4,5,6-tetra(9H-carbazol-9-yl) phthalonitrile), HAP-3TPA(4,4',4"-(1,3,3$a^1$,4,6,7,9-heptaazaphenalene-2,5,8-triyl)tris(N,N-bis(4-(tert-butyl)phenyl)aniline)), and 4CzIPN(1,2,3,5-tetrakis(carbazol-9-yl)-4,6-dicyanobenzene).

[Hole injection layer and hole transport layer]

The organic layer is preferably used as at least one of a hole injection layer or a hole transport layer. As described above, these layers can be easily formed by using an ink composition including an organic electronics material and a solvent.

When the organic EL element has the organic layer as a hole injection layer and further has a hole transport layer, a known material can be used for the hole transport layer. When the organic EL element has the organic layer as a hole transport layer and further has a hole injection layer, a known material can be used for the hole injection layer. Both the hole injection layer and the hole transport layer may be the organic layer. Examples of the known material include aromatic amine-based compounds (aromatic diamines such as, for example, N,N'-di(naphthalene-1-yl)-N,N'-diphenyl-benzidine

($\alpha$-NPD)), phthalocyanine-based compounds, and thiophene-based compounds (for example, thiophene-based conductive polymers such as poly(3,4-ethylenedioxythiophene):poly(4-styrenesulfonate) (PEDOT:PSS)).

When a hole transport layer is an organic layer having a changed solubility, a light emitting layer can be easily formed on the upper layer thereof through a wet process. In this case, a polymerization initiator may be included in the organic layer serving as the hole transport layer, or may be included in the organic layer underlying the hole transport layer.

[Electron Transport Layer, Electron Injection Layer]

Examples of materials that can be used for the electron transport layer and the electron injection layer include phenanthroline derivatives, bipyridine derivatives, nitro-substituted fluorene derivatives, diphenylquinone derivatives, thiopyran dioxide derivatives, condensed-ring tetracarboxylic acid anhydrides of naphthalene, perylene, and the like, carbodiimides, fluorenylidenemethane derivatives, anthraquinodimethane and anthrone derivatives, oxadiazole derivatives, thiadiazole derivatives, benzimidazole derivatives, quinoxaline derivatives, and aluminum complexes. The above-described organic electronics materials can also be used.

[Cathode]

Examples of cathode materials used include metals or metal alloys, such as Li, Ca, Mg, Al, In, Cs, Ba, Mg/Ag, LiF, and CsF.

[Anode]

Examples of anode materials used include metals (for example, Au) or other materials having conductivity. Examples of the other materials include oxides (for example, ITO: indium oxide/tin oxide), and conductive polymers (for example, polythiophene-polystyrene sulfonate mixtures

(PEDOT:PSS)).

[Substrate]

Glass, plastics, and the like can be used as the substrate. The substrate is preferably transparent and preferably has flexibility. Quartz glass, resin films, and the like can be preferably used.

The resin film is preferably a light-transmissive resin film. Examples of the resin film include films containing, as a main component, polyethylene terephthalate, polyethylene naphthalate, polyethersulfone, polyetherimide, polyetheretherketone, polyphenylene sulfide, polyarylate, polyimide, polycarbonate, cellulose triacetate, or cellulose acetate propionate.

When a resin film is used, an inorganic substance such as silicon oxide or silicon nitride may be coated onto the resin film to inhibit transmission of water vapor, oxygen, and the like.

[Sealing]

The organic EL element may be sealed in order to reduce influence of outside air and to prolong lifetime. Examples of the material used for the sealing include glass, epoxy resin, acrylic resin, plastic film such as polyethylene terephthalate and polyethylene naphthalate, and inorganic material such as silicon oxide or silicon nitride. However, there are no particular limitations on the material. A sealing method is also not particularly limited, and the sealing may be conducted using a known method.

[Emission Color]

There are no particular limitations on emission color of organic EL elements. White organic EL elements are preferable as they can be used in various lighting applications such as residential lighting, automotive interior lighting, and backlights for watches or liquid crystal displays.

As a method for forming a white organic EL element, a method of using multiple light emitting materials to simultaneously emit multiple emission colors and mixing the colors can be used. There are no particular limitations on combinations of multiple emission colors, and examples include a combination including three maximum emission wavelengths of blue, green, and red, and a combination including two maximum emission wavelengths of blue and yellow, yellowish green and orange, or the like. Control of the emission color can be achieved by appropriate adjusting types and amounts of light emitting materials.

<Display Element, Illumination Device, Display Device>

One embodiment relates to a display element including the organic EL element. For example, by using the organic EL element as an element corresponding to each pixel of red, green, and blue (RGB), a color display element can be obtained. Examples of image formation methods include a simple matrix where individual organic EL elements arrayed on a panel are directly driven by electrodes arranged in a matrix, and an active matrix type where a thin film transistor is arranged and driven on each element.

One embodiment relates to an illumination device including the organic EL element. One embodiment relates to a display device which includes an illumination device and a liquid crystal element as a display means. For example, the display device may be a display device using the illumination device as a backlight, and using a known liquid crystal element as a display means, that is, a liquid crystal display device.

EXAMPLES

Hereinafter, although the present invention will be described with reference to examples, the present invention is not limited to the descriptions below.

<1> Synthesis of Polymers

Raw material monomers used in the following examples and comparative examples are listed below.

[Chemical Formula 27]

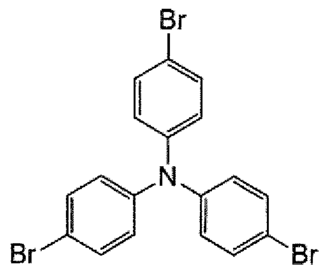

Monomer A1

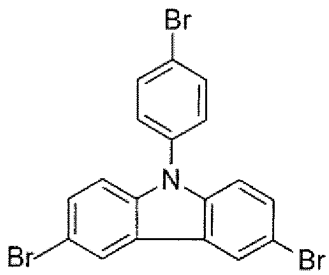

Monomer A2

[Chemical Formula 28]

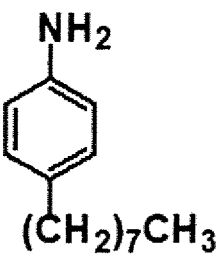

Monomer B1

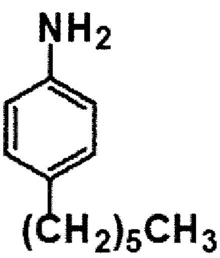

Monomer B2

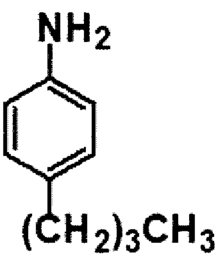

Monomer B3

[Chemical Formula 29]

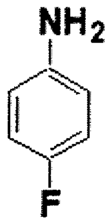

Monomer B4

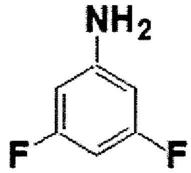

Monomer B5

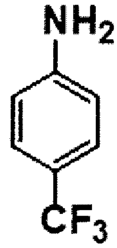

Monomer B6

[Chemical Formula 30]

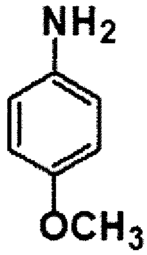

Monomer B7

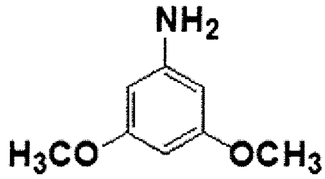

Monomer B8

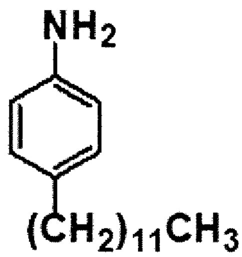

Monomer B9

[Chemical Formula 31]

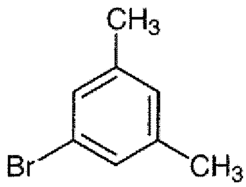

Monomer C1

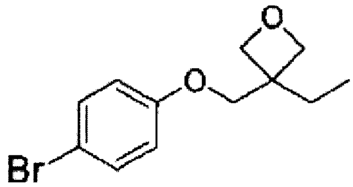

Monomer C2

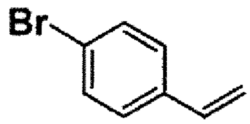

Monomer C3

(Example 1)

A Zimroth cooling tube and a reaction vessel equipped with a stirring function were prepared, and an oil bath was arranged so as to be freely movable back and forth relative to the reaction vessel. The following components were each charged into the reaction vessel, which was nitrogen-substituted, while injecting nitrogen, and a nitrogen gas supply device was connected to the tip of the Zimroth cooling tube to provide a nitrogen atmosphere reaction environment.

Raw material monomers: monomer A1 (1,285 mg, 2.67 mmol), monomer B3 (746 mg, 5.00 mmol), and monomer C1 (370 mg, 2.00 mmol)

Organic solvent (toluene): dehydrated toluene stored under a nitrogen atmosphere, manufactured by FUJIFILM Wako Pure Chemical Corporation, 27.8 mL

Base: sodium t-butoxy, manufactured by Tokyo Chemical Industry Co., Ltd., 1,442 mg (3.0 equivalents (15 mmol) based on monomer B3 having an amino group)

Catalyst: $Pd[P(t\text{-}Bu)_3]_2$, manufactured by FUJIFILM Wako Pure Chemical Corporation, 102 mg (4.0% by mole based on monomer B3 having an amino group)

Additive: $P(t\text{-}Bu)_3.HBF_4$, manufactured by FUJIFILM Wako Pure Chemical Corporation, 58 mg (4.0% by mole based on amine monomer B3 having an amino group)

Next, the mixture was heated in an oil bath (bath temperature: 120°C) to a temperature at which the organic

solvent in the reaction vessel was refluxed, and the reaction was performed for two hours while stirring. After the above reaction, the temperature of the reaction liquid in the reaction vessel was lowered to room temperature to obtain a suspended reaction liquid.

Meanwhile, sodium N,N-diethyldithiocarbamate trihydrate (manufactured by FUJIFILM Wako Pure Chemical Corporation) was dissolved in a solution of water: methanol = 8 : 2 (volume ratio) and adjusted to 0.1 mol/L to obtain a solution (NaDDTC solution (water/MeOH mixture)) including sodium N,N-diethyldithiocarbamate trihydrate.

To about 30 mL of the suspended reaction liquid after the above reaction, 10 mL of a solution including sodium N,N-diethyldithiocarbamate trihydrate prepared previously was added, and stirred to obtain a mixed liquid. When the stirring was stopped, the mixed liquid was separated into an organic phase and an aqueous phase. Then, the organic phase was collected from the separated mixed liquid. The collected organic phase (liquid) was reprecipitated using methanol-water (9:1), and the resulting precipitate was subjected to suction filtration.

Then, ethyl acetate was added to the obtained precipitate, and the precipitate was washed with ethyl acetate by performing stirring for 15 minutes while heating in an oil bath to 60°C. Subsequently, the washed precipitate was collected through suction filtration. For the collected precipitate, washing with ethyl acetate was once more performed in the same manner as described above to remove residual monomers and reaction products soluble in ethyl acetate from the precipitate. Subsequently, the precipitate washed with ethyl acetate was dried under reduced pressure to obtain a polymer (light yellow powder).

By measuring proton nuclear magnetic resonance ($^1$H-NMR) spectrum of the polymer, it was confirmed that the polymer had a structure obtained by polycondensation of monomer A1, monomer B3, and monomer C1. The yield of the polymer was 72%, the weight average molecular weight (Mw) was 47,500, the number average molecular weight (Mn) was 11,900, and the molecular weight distribution Mw/Mn was 4.0.

Note that the $^1$H-NMR spectrum was measured using an AVANCE-600NMR spectrometer of Bruker Corporation. Mw and Mn were measured using a Prominence GPC system manufactured by SHIMADZU CORPORATION. In the measurement of Mw and Mn, according to the gel permeation chromatography (GPC) method, a styrene gel column was used, calibration was conducted with standard polystyrene at 40°C, and tetrahydrofuran was used as an eluent. Measurement conditions were as follows. These are also the same in examples and comparative examples described below.

Liquid feeding pump: L-6050 Hitachi High-Technologies Corporation
UV-Vis detector: L-3000 Hitachi High-Technologies Corporation
Column: Gelpack (registered trademark) GL-A160S/GL-A150S Resonac Corporation
Eluent: THF (for HPLC, does not contain stabilizers) FUJIFILM Wako Pure Chemical Corporation
Flow Rate: 1 ml/min
Column temperature: room temperature
Molecular weight standard: standard polystyrene

(Examples 2 to 22)

Polymers were produced in the same manner as in example 1 except that the raw material monomer, the blending amount, and the catalyst were changed as listed in Table 1. Then, purified polymers were obtained in the same manner as in example 1 except that the separation and purification conditions listed in Table 2 were applied to the obtained polymers.

(Comparative Examples 1 to 15)

Polymers were produced in the same manner as in example 1 except that the raw material monomer, the blending amount, and the catalyst were changed as listed in Table 1. Then, purified polymers were obtained in the same manner as in example 1 except that the separation and purification conditions listed in Table 2 were applied to the obtained polymers. The separation and purification conditions are as follows.

Separation and purification itself was not performed in comparative examples 1 and 3. More specifically, after the above reaction, the temperature of a reaction liquid in the reaction vessel was lowered to room temperature to obtain a suspended reaction liquid. When water was added to the reaction liquid and stirred, the mixture liquid was suspended and difficult to separate. Thus, the suspended mixed liquid was reprecipitated using methanol-water (9:1). The precipitate was collected through suction filtration. Ethyl acetate was added to the collected precipitate, and the precipitate was washed with ethyl acetate by stirring for 15 minutes while heating in an oil bath at 60°C. The washed precipitate was then collected through suction filtration.

Using the collected precipitate, washing with ethyl acetate was once more performed in the same manner as

described above to remove residual monomer and reaction products soluble in ethyl acetate from the precipitate. Subsequently, the precipitate washed with ethyl acetate was dried under reduced pressure to obtain a polymer (light yellow powder).

In comparative examples 2 and 4 to 14, methanol was not added at the time of separation and purification. More specifically, after the above reaction, the temperature of a reaction liquid in the reaction vessel was lowered to room temperature to obtain a suspended reaction liquid.

Meanwhile, sodium N,N-diethyldithiocarbamate trihydrate (manufactured by FUJIFILM Wako Pure Chemical Corporation) was mixed with water and adjusted to 0.1 mol/L to obtain an aqueous solution of sodium N,N-diethyldithiocarbamate trihydrate (NaDDTC aqueous solution).

An amount of 10 mL of the previously prepared aqueous solution of sodium N,N-diethyldithiocarbamate trihydrate was added to the suspended reaction liquid after the above reaction, and the mixture was stirred to obtain a mixed liquid. The mix liquid obtained after the stirring was suspended and difficult to separate. Thus, the suspended mixed liquid was reprecipitated using methanol-water (9:1), and the resulting precipitate was collected through suction filtration.

Then, ethyl acetate was added to the obtained precipitate, and the precipitate was washed with ethyl acetate by performing stirring for 15 minutes while heating in an oil bath to 60°C. Subsequently, the washed precipitate was collected through suction filtration. For the collected precipitate, washing with ethyl acetate was once more performed in the same manner as described above to remove residual monomers and reaction products soluble in ethyl acetate from the precipitate. Subsequently, the precipitate washed with ethyl acetate was dried under reduced pressure to obtain a polymer (light yellow powder).

Details of the components used in examples are as follows. Details of components other than those described below are as described above.

(Solvent)

Anisole: manufactured by FUJIFILM Wako Pure Chemical Corporation

(Catalyst)

Xphos Pd G2:chloro(2-dicyclohexylphosphino-2',4',6'-triisopropyl-1,1'-biphenyl)[2-(2'-amino-1,1'-biphenyl)]palladium

$PdCl_2(amphos)_2$:bis(di-tert-butyl(4-dimethylaminophenyl)phosphine)dichloropalladium(II), manufactured by Aldrich Chemical Company

$PdArBrP(t\text{-}Bu)_3$: a compound represented by formula (2) below (prepared by reacting tris(dibenzylideneacetone) dipalladium(0) (Tokyo Chemical Industry Co., Ltd.), o-bromotoluene (Tokyo Chemical Industry Co., Ltd.), and tri-tert-butylphosphine (Tokyo Chemical Industry Co., Ltd.).)

[Chemical Formula 32]

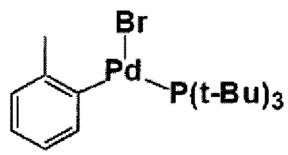

(2)

<2> Properties of Polymers

(Method of Analyzing Amount of Impurities)

The contents of palladium(Pd), Br, and Cl as impurities in polymers were measured for each polymer obtained in examples and comparative examples. The measurement was performed using an energy-dispersive X-ray fluorescence analyzer (hereinafter EDX) under the following conditions. Results are listed in table 2. In table 2, "N.D." described in Table 2 means not detected, which means below the detection limit.

Apparatus: Shimadzu Corporation, EDX-7000

X-ray tube: Rh target
Ambient: atmosphere
Measurement time (sec): Pd: 600, Br: 100, Cl: 1,000
Analysis ranges (keV): Pd: 20.72 to 21.52, Br: 11.66 to 12.16, Cl: 2.42 to 2.82

[Table 1-1]

Table 1-1

| Item | Trifunctional | Difunctional | Monofunctional | Blending amount/mg(mmol) | | | Catalyst | | | Additive | | | Base | | | Solvent | | N.V./wt% (synthesis concentration) | Reaction temperature /°C |
|---|---|---|---|---|---|---|---|---|---|---|---|---|---|---|---|---|---|---|---|
| | A | B | C | A | B | C | Product name | Amount added /mg | Amount added /mol% | Product name | Amount added /mg | Amount added /mol% | Product name | Amount added /mg | Amount added/ equivalents | Product name | Amount added /mL | | |
| Example 1 | A1 | B3 | C1 | 1285(2.67) | 746 (5.00) | 370(2.00) | $Pd[P(t\text{-}Bu)_3]_2$ | 102 | 4.0 | $P(t\text{-}Bu)_3 \cdot HBF_4$ | 58 | 4.0 | tert-BuONa | 1442 | 3.0(15mmol) | Toluene | 27.8 | 10.0 | 120 |
| Example 2 | A1 | B3 | C2 | 1285(2.67) | 746 (5.00) | 542 (2.00) | $Pd[P(t\text{-}Bu)_3]_2$ | 102 | 4.0 | $P(t\text{-}Bu)_3 \cdot HBF_4$ | 58 | 4.0 | tert-BuONa | 1442 | 3.0(15mmol) | Toluene | 29.8 | 10.0 | 120 |
| Example 3 | A1 | B3 | C3 | 1285(2.67) | 746 (5.00) | 366 (2.00) | $Pd[P(t\text{-}Bu)_3]_2$ | 102 | 4.0 | $P(t\text{-}Bu)_3 \cdot HBF_4$ | 58 | 4.0 | tert-BuONa | 1442 | 3.0(15mmol) | Toluene | 27.7 | 10.0 | 120 |
| Example 4 | A1 | B3 | C1 | 1285(2.67) | 746 (5.00) | 370(2.00) | Xphos Pd G2 | 20 | 0.5 | $P(t\text{-}Bu)_3 \cdot HBF_4$ | 22 | 1.5 | tert-BuONa | 1442 | 3.0(15mmol) | Toluene | 27.8 | 10.0 | 120 |
| Example 5 | A1 | B3 | C3 | 1285(2.67) | 746 (5.00) | 370(2.00) | Xphos Pd G2 | 20 | 0.5 | $P(t\text{-}Bu)_3 \cdot HBF_4$ | 22 | 1.5 | tert-BuONa | 1442 | 3.0(15mmol) | Toluene | 27.7 | 10.0 | 120 |
| Example 6 | A1 | B3 | C1 | 1285(2.67) | 746 (5.00) | 370(2.00) | Xphos Pd G2 | 20 | 0.5 | - | - | - | tert-BuONa | 1442 | 3.0(15mmol) | Toluene | 27.8 | 10.0 | 120 |
| Example 7 | A1 | B3 | C3 | 1285(2.67) | 746 (5.00) | 370(2.00) | Xphos Pd G2 | 20 | 0.5 | - | - | - | tert-BuONa | 1442 | 3.0(15mmol) | Toluene | 27.7 | 10.0 | 120 |
| Example 8 | A1 | B3 | C1 | 1285(2.67) | 746 (5.00) | 370 (2.00) | $PdCl_2$(amphos)$_2$ | 18 | 0.5 | - | - | - | tert-BuONa | 1442 | 3.0(15mmol) | Toluene | 27.8 | 10.0 | 120 |
| Example 9 | A1 | B3 | C1 | 1285 (2.67) | 746(5.00) | 370(200) | PdArBrP(t-Bu)$_3$ | 12 | 0.5 | - | - | - | tert-BuONa | 1442 | 3.0(15mmol) | Toluene | 27.8 | 10.0 | 120 |

(continued)

| Item | Trifunctional | Difunctional | Monofunctional | Blending amount/mg(mmol) | | | Catalyst | | | Additive | | | Base | | | Solvent | | N.V./wt% (synthesis concentration) | Reaction temperature /°C |
|---|---|---|---|---|---|---|---|---|---|---|---|---|---|---|---|---|---|---|---|
| | A | B | C | A | B | C | Product name | Amount added /mg | Amount added /mol% | Product name | Amount added /mg | Amount added /mol% | Product name | Amount added /mg | Amount added/ equivalents | Product name | Amount added /mL | | |
| Example 10 | A1 | B3 | C1 | 1285(2.67) | 746 (5.00) | 370(2.00) | Xphos Pd G2 | 20 | 0.5 | - | - | - | tert-BuONa | 1442 | 3.0(15mmol) | Anisole | 24.1 | 10.0 | 120 |
| Example 11 | A1 | B5 | C2 | 1285(2.67) | 646 (500) | 542 (2.00) | Xphos Pd G2 | 20 | 0.5 | - | - | - | tert-BuONa | 1442 | 3.0(15mmol) | Toluene | 28.6 | 10.0 | 120 |
| Example 12 | A1 | B5 | C2 | 1285(2.67) | 646 (500) | 542 (2.00) | Xphos Pd G2 | 20 | 0.5 | - | - | - | tert-BuONa | 1442 | 3.0(15mmol) | Anisole | 24.9 | 10.0 | 160 |
| Example 13 | A1 | B5 | C2 | 803(1.33) | 646 (500) | 1356 (5.00) | Xphos Pd G2 | 20 | 0.5 | - | - | - | tert-BuONa | 1442 | 3.0(15mmol) | Anisole | 28.2 | 10.0 | 160 |
| Example 14 | A1 | B5 | C2 | 964 (2.00) | 646 (500) | 1085 (4.00) | Xphos Pd G2 | 20 | 0.5 | - | - | - | tert-BuONa | 1442 | 3.0(15mmol) | Anisole | 27.1 | 10.0 | 160 |
| Example 15 | A1 | B5 | C2 | 1071(2.22) | 646 (500) | 904 (3.33) | Xphos Pd G2 | 20 | 0.5 | - | - | - | tert-BuONa | 1442 | 3.0(15mmol) | Anisole | 26.3 | 10.0 | 160 |
| Example 16 | A1 | B5 | C2 | 1112(2.31) | 646 (500) | 834(3.08) | Xphos Pd G2 | 20 | 0.5 | - | - | - | tert-BuONa | 1442 | 3.0(15mmol) | Anisole | 26.1 | 10.0 | 160 |
| Example 17 | A1 | B3 | C2 | 1285(2.67) | 746 (5.00) | 542 (2.00) | Xphos Pd G2 | 20 | 0.5 | - | - | - | tert-BuONa | 1442 | 3.0(15mmol) | Anisole | 25.9 | 10.0 | 160 |
| Example 18 | A1 | B1 | C2 | 1285(2.67) | 1027 (5.00) | 542 (2.00) | Xphos Pd G2 | 20 | 0.5 | - | - | - | tert-BuONa | 1442 | 3.0(15mmol) | Anisole | 28.7 | 10.0 | 160 |

(continued)

| Item | Trifunctional | Difunctional | Monofunctional | Blending amount/mg(mmol) | | | Catalyst | | | Additive | | | Base | | | Solvent | | N.V./wt% (synthesis concentration) | Reaction temperature /°C |
|---|---|---|---|---|---|---|---|---|---|---|---|---|---|---|---|---|---|---|---|
| | A | B | C | A | B | C | Product name | Amount added /mg | Amount added /mol% | Product name | Amount added /mg | Amount added /mol% | Product name | Amount added /mg | Amount added/ equivalents | Product name | Amount added /mL | | |
| Example 19 | A1 | B9 | C2 | 1285(2.67) | 1307 (5.00) | 542 (2.00) | Xphos Pd G2 | 20 | 0.5 | - | - | - | tert-BuONa | 1442 | 3.0(15mmol) | Anisole | 31.5 | 10.0 | 160 |
| Example 20 | A1 | B5 | C2 | 1285(2.67) | 646 (500) | 542 (2.00) | $PdCl_2$(amphos)$_2$ | 18 | 0.5 | - | - | - | tert-BuONa | 1442 | 3.0(15mmol) | Anisole | 24.9 | 10.0 | 160 |
| Example 21 | A2 | B3 | C1 | 1280(2.67) | 746 (5.00) | 370(2.00) | Xphos Pd G2 | 20 | 0.5 | - | - | - | tert-BuONa | 1442 | 3.0(15mmol) | Toluene | 26.3 | 10.0 | 120 |
| Example 22 | A2 | B3 | C3 | 1280(2.67) | 746 (5.00) | 366 (2.00) | Xphos Pd G2 | 20 | 0.5 | - | - | - | tert-BuONa | 1442 | 3.0(15mmol) | Toluene | 26.2 | 10.0 | 120 |

[Table 1-2]

Table 1-2

| Item | Trifunctional | Difunctional | Monofunctional | Blending amount/mg(mmol) | | | Catalyst | | | Additive | | | Base | | | Solvent | | N.V./wt% (synthesis concentration) | Reaction temperature /°C |
|---|---|---|---|---|---|---|---|---|---|---|---|---|---|---|---|---|---|---|---|
| | A | B | C | A | B | C | Product name | Amount added /mg | Amount added /mol% | Product name | Amount added /mg | Amount added /mol% | Product name | Amount added /mg | Amount added/ equivalents | Product name | Amount added /mL | | |
| Comparative example 1 | A1 | B3 | C1 | 1285 (26-7) | 746 (5.00) | 370(20-0) | $Pd[P(t\text{-}Bu)_3]_2$ | 102 | 4.0 | $P(t\text{-}Bu)_3 \cdot HBF_4$ | 58 | 4.0 | tert-BuONa | 1442 | 3.0(15mmol) | Toluene | 27.8 | 10.0 | 120 |
| Comparative example 2 | A1 | B3 | C1 | 1285 (26-7) | 746 (5.00) | 370(20-0) | $Pd[P(t\text{-}Bu)_3]_2$ | 102 | 4.0 | $P(t\text{-}Bu)_3 \cdot HBF_Q$ | 58 | 4.0 | tert-BuONa | 1442 | 3.0(15mmol) | Toluene | 27.8 | 10.0 | 120 |
| Comparative example 3 | A1 | B1 | C1 | 1285 (26-7) | 1027 (500) | 370(20-0) | $Pd[P(t\text{-}Bu)_3]_2$ | 102 | 4.0 | $P(t\text{-}Bu)_3 \cdot HBF_Q$ | 58 | 4.0 | tert-BuONa | 1442 | 3.0(15mmol) | Toluene | 31.0 | 10.0 | 120 |
| Comparative example 4 | A1 | B2 | C1 | 1285 (26-7) | 886 (5.00) | 370(20-0) | $Pd[P(t\text{-}Bu)_3]_2$ | 102 | 4.0 | $P(t\text{-}Bu)_3 \cdot HBF_Q$ | 58 | 4.0 | tert-BuONa | 1442 | 3.0(15mmol) | Toluene | 29.4 | 10.0 | 120 |
| Comparative example 5 | A1 | B3 | C1 | 1285 (26-7) | 746(5.-00) | 370(20-0) | Xphos Pd G2 | 20 | 0.5 | $P(t\text{-}Bu)_3 \cdot HBF_4$ | 22 | 1.5 | tert-BuONa | 1442 | 3.0(15mmol) | Toluene | 27.8 | 10.0 | 120 |
| Comparative example 6 | A1 | B3 | C1 | 1285 (26-7) | 746(5.-00) | 370(20-0) | Xphos Pd G2 | 20 | 0.5 | - | - | - | tert-BuONa | 1442 | 3.0(15mmol) | Toluene | 27.8 | 10.0 | 120 |
| Comparative example 7 | A1 | B3 | C1 | 1285 (26-7) | 746 (5.00) | 370(20-0) | $PdCl_2(amphos)_2$ | 18 | 0.5 | - | - | - | tert-BuONa | 1442 | 3.0(15mmol) | Toluene | 27.8 | 10.0 | 120 |
| Comparative example 8 | A1 | B3 | C1 | 1285 (26-7) | 746 (5.00) | 370(20-0) | $PdArBrP(t\text{-}Bu)_3$ | 12 | 0.5 | - | - | - | tert-BuONa | 1442 | 3.0(15mmol) | Toluene | 27.8 | 10.0 | 120 |
| Comparative example 9 | A1 | B4 | C1 | 1285 (26-7) | 556 (5.00) | 370(2.-00) | Xphos Pd G2 | 20 | 0.5 | - | - | - | tert-BuONa | 1442 | 3.0(15mmol) | Toluene | 25.6 | 10.0 | 120 |

(continued)

| Item | Trifunctional | Difunctional | Monofunctional | Blending amount/mg(mmol) | | | Catalyst | | | Additive | | | Base | | | Solvent | | N.V./wt% (synthesis concentration) | Reaction temperature /°C |
|---|---|---|---|---|---|---|---|---|---|---|---|---|---|---|---|---|---|---|---|
| | A | B | C | A | B | C | Product name | Amount added /mg | Amount added /mol% | Product name | Amount added /mg | Amount added /mol% | Product name | Amount added /mg | Amount added/ equivalents | Product name | Amount added /mL | | |
| Comparative example 10 | A1 | B5 | C1 | 1285 (26.7) | 646(5.00) | 370(2.00) | Xphos Pd G2 | 20 | 0.5 | - | - | - | tert-BuONa | 1442 | 3.0(15mmol) | Toluene | 26.6 | 10.0 | 120 |
| Comparative example 11 | A1 | B6 | C1 | 1285 (26.7) | 806 (5.00) | 370(200) | Xphos Pd G2 | 20 | 0.5 | - | - | - | tert-BuONa | 1442 | 3.0(15mmol) | Toluene | 28.5 | 10.0 | 120 |
| Comparative example 12 | A1 | B7 | C1 | 1285 (26.7) | 616(5.00) | 370(200) | Xphos Pd G2 | 20 | 0.5 | - | - | - | tert-BuONa | 1442 | 3.0(15mmol) | Toluene | 26.3 | 10.0 | 120 |
| Comparative example 13 | A1 | B8 | C1 | 1285 (26.7) | 766 (5.00) | 370(200) | Xphos Pd G2 | 20 | 0.5 | - | - | - | tert-BuONa | 1442 | 3.0(15mmol) | Toluene | 28.0 | 10.0 | 120 |
| Comparative example 14 | A1 | B3 | C1 | 1285 (26.7) | 746(5.00) | 370(200) | Xphos Pd G2 | 20 | 0.5 | - | - | - | tert-BuONa | 1442 | 3.0(15mmol) | Anisole | 24.1 | 10.0 | 120 |
| Comparative example 15 | A2 | B3 | C1 | 1280 (2.67) | 746 (5.00) | 370(200) | Xphos Pd G2 | 20 | 0.5 | - | - | - | tert-BuONa | 1442 | 3.0(15mmol) | Toluene | 26.3 | 10.0 | 120 |

[Tablw 2-1]

Table 2-1

| Item | Trifunctional | Difunctional | Monofunctional | Reaction liquid state presence or absence of emulsion | Separation and purification conditions | Organic phase/aqueous phase possibility of separation | Molecular weight | | Yield/wt % | Impurities concentration | | |
|---|---|---|---|---|---|---|---|---|---|---|---|---|
| | A | B | C | | | | Mw | Mn | | Pd/ppm | Br/ppm | Cl/ppm |
| Example 1 | A1 | B3 | C1 | Present (strong) | NaDDTC solution (water/-MeOH mixture, 0.1M) | Possible | 47,500 | 11,900 | 72 | 89 | 19 | N.D. |
| Example 2 | A1 | B3 | C2 | Present (strong) | NaDDTC solution (water/-MeOH mixture, 0.1M) | Possible | 60,500 | 25,300 | 55 | 61 | 66 | 7 |
| Example 3 | A1 | B3 | C3 | Present (strong) | NaDDTC solution (water/-MeOH mixture, 0.1M) | Possible | 51,400 | 20,000 | 50 | 34 | 24 | 8 |
| Example 4 | A1 | B3 | C1 | Present (strong) | NaDDTC solution (water/-MeOH mixture, 0.1M) | Possible | 34,900 | 11,900 | 63 | 40 | 116 | 5 |
| Example 5 | A1 | B3 | C3 | Present (strong) | NaDDTC solution (water/-MeOH mixture, 0.1M) | Possible | 43,900 | 15,500 | 60 | 93 | 12 | 8 |
| Example 6 | A1 | B3 | C1 | Present (strong) | NaDDTC solution (water/-MeOH mixture, 0.1M) | Possible | 36,000 | 14,000 | 58 | 18 | N.D. | 4 |

(continued)

| Item | Trifunctional | Difunctional | Monofunctional | Reaction liquid state presence or absence of emulsion | Separation and purification conditions | Organic phase/aqueous phase possibility of separation | Molecular weight | | Yield/wt % | Impurities concentration | | |
|---|---|---|---|---|---|---|---|---|---|---|---|---|
| | A | B | C | | | | Mw | Mn | | Pd/ppm | Br/ppm | Cl/ppm |
| Example 7 | A1 | B3 | C3 | Present (strong) | NaDDTC solution (water/-MeOH mixture, 0.1M) | Possible | 46,800 | 15,900 | 57 | 90 | 4 | N.D. |
| Example 8 | A1 | B3 | C1 | Present (strong) | NaDDTC solution (water/-MeOH mixture, 0.1M) | Possible | 24,800 | 9,600 | 61 | 91 | 18 | 15 |
| Example 9 | A1 | B3 | C1 | Present (strong) | NaDDTC solution (water/-MeOH mixture, 0.1M) | Possible | 20,700 | 6,800 | 71 | 91 | 17 | 1 |
| Example 10 | A1 | B3 | C1 | Present (strong) | NaDDTC solution (water/-MeOH mixture, 0.1M) | Possible | 33,600 | 9,700 | 64 | 89 | 4 | 5 |
| Example 11 | A1 | B5 | C2 | Present (strong) | NaDDTC solution (water/-MeOH mixture, 0.1M) | Possible | 43,600 | 12,100 | 61 | 34 | 4 | <1 |
| Example 12 | A1 | B5 | C2 | Present (strong) | NaDDTC solution (water/-MeOH mixture, 0.1M) | Possible | 98,900 | 23,400 | 67 | 24 | <1 | 5 |

(continued)

| Item | Trifunctional | Difunctional | Monofunctional | Reaction liquid state presence or absence of emulsion | Separation and purification conditions | Organic phase/aqueous phase possibility of separation | Molecular weight | | Yield/wt % | Impurities concentration | | |
|---|---|---|---|---|---|---|---|---|---|---|---|---|
| | A | B | C | | | | Mw | Mn | | Pd/ppm | Br/ppm | Cl/ppm |
| Example 13 | A1 | B5 | C2 | Present (strong) | NaDDTC solution (water/-MeOH mixture, 0.1M) | Possible | 3,000 | 2,100 | 35 | 65 | N.D. | 4 |
| Example 14 | A1 | B5 | C2 | Present (strong) | NaDDTC solution (water/-MeOH mixture, 0.1M) | Possible | 8,900 | 4,900 | 66 | 100 | N.D. | 4 |
| Example 15 | A1 | B5 | C2 | Present (strong) | NaDDTC solution (water/-MeOH mixture, 0.1M) | Possible | 15,800 | 6,900 | 60 | 72 | N.D. | 7 |
| Example 16 | A1 | B5 | C2 | Present (strong) | NaDDTC solution (water/-MeOH mixture, 0.1M) | Possible | 22,900 | 9,200 | 61 | 95 | N.D. | 4 |
| Example 17 | A1 | B3 | C2 | Present (strong) | NaDDTC solution (water/-MeOH mixture, 0.1M) | Possible | 39,800 | 11,200 | 61 | 43 | N.D. | 4 |
| Example 18 | A1 | B1 | C2 | Present (strong) | NaDDTC solution (water/-MeOH mixture, 0.1M) | Possible | 36,700 | 14,100 | 65 | 68 | N.D. | 11 |

(continued)

| Item | Trifunctional | Difunctional | Monofunctional | Reaction liquid state presence or absence of emulsion | Separation and purification conditions | Organic phase/aqueous phase possibility of separation | Molecular weight | | Yield/wt % | Impurities concentration | | |
|---|---|---|---|---|---|---|---|---|---|---|---|---|
| | A | B | C | | | | Mw | Mn | | Pd/ppm | Br/ppm | Cl/ppm |
| Example 19 | A1 | B9 | C2 | Present (strong) | NaDDTC solution (water/-MeOH mixture, 0.1M) | Possible | 49,100 | 20,700 | 66 | 31 | <1 | 7 |
| Example 20 | A1 | B5 | C2 | Present (strong) | NaDDTC solution (water/-MeOH mixture, 0.1M) | Possible | 69,700 | 21,800 | 68 | 51 | 5 | 5 |
| Example 21 | A3 | B3 | C1 | Present (strong) | NaDDTC solution (water/-MeOH mixture, 0.1M) | Possible | 55,100 | 18,100 | 90 | 21 | N.D. | 13 |
| Example 22 | A3 | B3 | C3 | Present (strong) | NaDDTC solution (water/-MeOH mixture, 0.1M) | Possible | 78,000 | 22,000 | 91 | 20 | N.D. | 12 |

[Table 2-2]

Table 2-2

| Item | Trifunctional | Difunctional | Monofunctional | Reaction liquid state presence or absence of emulsion | Separation and purification conditions | Organic phase/aqueous phase possibility of separation | Molecular weight | | Yield/wt % | Impurities concentration | | |
|---|---|---|---|---|---|---|---|---|---|---|---|---|
| | A | B | C | | | | Mw | Mn | | Pd/ppm | Br/ppm | Cl/ppm |
| Comparative example 1 | A1 | B3 | C1 | Present (strong) | - | Not possible | 47,300 | 12,000 | 72 | 1,392 | 18 | N.D. |
| Comparative example 2 | A1 | B3 | C1 | Present (strong) | NaDDTC aqueous solution (0.1M) | Not possible | 47,000 | 11,500 | 72 | 220 | 18 | <1 |
| Comparative example 3 | A1 | B1 | C1 | Present (strong) | - | Not possible | 35,400 | 9,800 | 70 | 767 | 52 | 3 |
| Comparative example 4 | A1 | B2 | C1 | Present (strong) | NaDDTC aqueous solution (0.1M) | Not possible | 37,100 | 12,500 | 65 | 265 | 14 | 1 |
| Comparative example 5 | A1 | B3 | C1 | Present (strong) | NaDDTC aqueous solution (0.1M) | Not possible | 34,900 | 11,900 | 63 | 163 | 118 | 9 |
| Comparative example 6 | A1 | B3 | C1 | Present (strong) | NaDDTC aqueous solution (0.1M) | Not possible | 33,300 | 12,500 | 58 | 247 | 0 | 3 |
| Comparative example 7 | A1 | B3 | C1 | Present (strong) | NaDDTC aqueous solution (0.1M) | Not possible | 24,200 | 9,400 | 60 | 230 | 17 | 15 |

(continued)

| Item | Trifunctional | Difunctional | Monofunctional | Reaction liquid state presence or absence of emulsion | Separation and purification conditions | Organic phase/aqueous phase possibility of separation | Molecular weight | | Yield/wt % | Impurities concentration | | |
|---|---|---|---|---|---|---|---|---|---|---|---|---|
| | A | B | C | | | | Mw | Mn | | Pd/ppm | Br/ppm | Cl/ppm |
| Comparative example 8 | A1 | B3 | C1 | Present (strong) | NaDDTC aqueous solution (0.1M) | Not possible | 19,900 | 6,500 | 71 | 150 | 16 | <1 |
| Comparative example 9 | A1 | B4 | C1 | Present (strong) | NaDDTC aqueous solution (0.1M) | Not possible | 13,300 | 7,300 | 55 | 1,092 | 2,520 | N.D. |
| Comparative example 10 | A1 | B5 | C1 | Present (strong) | NaDDTC aqueous solution (0.1M) | Not possible | 47,300 | 15,100 | 54 | 355 | 33 | N.D. |
| Comparative example 11 | A1 | B6 | C1 | Present (strong) | NaDDTC aqueous solution (0.1M) | Not possible | 8,300 | 2,700 | 23 | 203 | 2,162 | 6 |
| Comparative example 12 | A1 | B7 | C1 | Present (strong) | NaDDTC aqueous solution (0.1M) | Not possible | 20,200 | 3,900 | 63 | 218 | 287 | N.D. |
| Comparative example 13 | A1 | B8 | C1 | Present (strong) | NaDDTC aqueous solution (0.1M) | Not possible | 39,800 | 6,100 | 63 | 299 | 16 | 6 |

(continued)

| Item | Trifunctional | Difunctional | Monofunctional | Reaction liquid state presence or absence of emulsion | Separation and purification conditions | Organic phase/aqueous phase possibility of separation | Molecular weight | | Yield/wt % | Impurities concentration | | |
|---|---|---|---|---|---|---|---|---|---|---|---|---|
| | A | B | C | | | | Mw | Mn | | Pd/ppm | Br/ppm | Cl/ppm |
| Comparative example 14 | A1 | B3 | C1 | Present (strong) | NaDDTC aqueous solution (0.1M) | Not possible | 32,600 | 8,000 | 70 | 237 | 9 | <1 |
| Comparative example 15 | A3 | B3 | C1 | Present (strong) | NaDDTC aqueous solution (0.1M) | Not possible | 55,100 | 18,100 | 21 | 140 | N.D. | 13 |

As listed in table 2, all the reaction liquids after the coupling reaction were suspended and became an emulsion state when water was added. In contrast, in the example where a water-soluble organic solvent such as methanol was added to the suspended reaction liquid in the separation and purification step of the polymer, the emulsion state could be eliminated and the polymer could be easily separated into an organic phase and an aqueous phase. In the separation and purification step of a reaction liquid, in comparison with examples 1 to 22 where methanol was added to the reaction liquid, and comparative examples 2 and 4 to 15 where methanol was not added, it is obvious that the amount of impurities in the example polymers is remarkably small. Therefore, according to the production method using a water-soluble organic solvent such as methanol, even when an emulsion is formed, separation into an organic phase and an aqueous phase can be easily performed, and furthermore, in a polymer collected from the organic phase, the amount of impurities derived from components used in the reaction can be effectively reduced.

<3> Properties of Polymers

(1) Production of Hole Only Device (HOD)

Using the arylamine polymers obtained in example 6 and comparative example 2, an ink composition was each prepared according to a method described below. Using the obtained ink composition, an HOD for conductivity evaluation was produced.

The arylamine polymer (50.0 mg) described above, and the ionic compound (1) (0.5 mg) described below were weighed into a 9 mL screw tube, and toluene (2,449.5 mg) was added and dissolved to prepare an ink composition. The ink composition was filtered using a PTFE filter (pore size 0.2 μm).

[Chemical Formula 33]

Ionic compound (1)

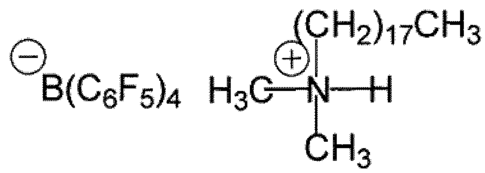

The filtered ink composition was dropped onto a quartz substrate (length 22 mm × width 29 mm × thickness 0.7 mm, hereinafter ITO substrate) on which ITO was patterned to a width of 1.6 mm, and was formed into a film using a spin coater. Subsequently, curing heating was conducted at 230°C for 30 minutes under a nitrogen atmosphere to form an organic layer (cured coating film or dried coating film) with a film thickness of 60 nm on the ITO substrate.

ITO substrates each having an organic layer prepared as described above were transferred into a vacuum evaporator, and aluminum (Al) was evaporated to 100 nm on the organic layer using a vapor deposition method. Further, a sealing treatment was conducted to manufacture a hole only device (hereinafter referred to as HOD) for conductivity evaluation. FIG. 2 is a schematic cross-sectional view illustrating the structure of the HOD. As illustrated in FIG. 2, the HOD is a laminate having an anode 12, an organic layer (hole injection layer) 13, and a cathode 14 in this order on a substrate 11, and a sealing treatment (not illustrated) was conducted to surround the laminate.

(2) Evaluation of HOD

(2-1) Evaluation of Conductivity

An applied voltage was measured for the HODs for conductivity evaluation of example 6 and comparative example 2, which were produced previously. Results are listed in table 3.

[Table 3]

Table 3

| Item | (1) Conductivity evaluation 1 (V) | (2) Conductivity evaluation 2 (V) |
|---|---|---|
| Example 6 | 0.05 | 0.6 |

(continued)

| Item | (1) Conductivity evaluation 1 (V) | (2) Conductivity evaluation 2 (V) |
|---|---|---|
| Comparative example 2 | 0.15 | 0.85 |

In table 3, details of items (1) and (2) are as follows.

(1) Conductivity Evaluation 1

The applied voltage was changed, and the voltage at a current density of 0.1 $mA/cm^2$ was measured.

(2) Conductivity Evaluation 2

The applied voltage was changed, and the voltage at a current density of 20 $mA/cm^2$ was measured.

(2-2) Evaluation of Hole Density

Using the HODs for conductivity evaluation of example 1 and comparative example 2 produced above, the hole density was evaluated using a method described below.

(Evaluation Method)

Information on the hole density can be obtained using impedance spectroscopy (IS method). Specifically, the ITOs and Al electrodes of the HODs of example 6 and comparative example 2 were connected to an LCR meter under the following conditions. Then, a frequency dependence of impedance of the HODs was measured and analyzed, and the hole density was calculated.

<Measurement Conditions>

Apparatus: LCR meter (manufactured by NF CORPORATION, ZM2376)
Frequency range: 0.1 Hz to 5.5 MHz
AC amplitude pressure: 100 mV

<Calculation Method of Hole Density>

Assuming that the organic layer has an electrical resistance "R" and a capacitance "C", and approximating with a parallel circuit model, a complex impedances "$Z_1$ (equation 1)" and "$Z_2$ (equation 2)" of a circuit model are obtained as described below.

[Mathematical Formula 1]

$$Z_1 = \frac{R}{1+\omega^2 R^2 C^2} \quad \cdots \text{(Equation 1)}$$

$$Z_2 = \frac{\omega R^2 C}{1+\omega^2 R^2 C^2} \quad \cdots \text{(Equation 2)}$$

$R$ ··· Resistance $C$··· -Capacitance $\omega$ ··· Angular frequency

In analysis of a frequency dependence of the impedance, moduli "$M_1$ (equation 3)" and "$M_2$ (equation 4)" were used as illustrated below.

[Mathematical Formula 2]

$$M_1 \equiv \omega Z_2 = \frac{\omega^2 R^2 C}{1+\omega^2 R^2 C^2} \quad \cdots \text{(Equation 3)}$$

$$M_2 \equiv \omega Z_1 = \frac{\omega R}{1+\omega^2 R^2 C^2} \quad \cdots \text{(Equation 4)}$$

The resistance and capacitance of each organic layer can be obtained by satisfying the following relations (equations 5 and 6) with respect to the observed peaks and heights of "$M_1$" and "$M_2$".

[Mathematical Formula 3]

$$M_{2max} = 1/2C \quad \cdots \text{(Equation 5)}$$

$$M_1 = 1/C \quad \cdots \text{(Equation 6)}$$

In the HOD with holes doped by an ionic compound (polymerization initiator), holes move such that a HOMO level matches a work function of a metal at the interface with the metal, and this forms a depletion layer with thickness "d". Here, the capacitance "C" and the thickness "d" of the depletion layer are given by equation 7, as described below.
[Mathematical Formula 4]

$$C = \frac{\varepsilon \varepsilon_0 S}{d} \quad \cdots \quad \text{(Equation 7)}$$

$\varepsilon$ ⋯ Relative permittivity of resin
$\varepsilon_0$ ⋯ Relative permittivity of vacuum
$S$ ⋯ Surface area

Further, when the thickness "d" of the depletion layer is a space charge density (anion density) "N" in the depletion layer, it is expressed by equation 8 as illustrated below when no bias voltage is applied. Here, since the anion density "N" and the hole density are equal, the hole density can be calculated by using equation 8.
[Mathematical Formula 5]

$$d = \left\{ \frac{2\varepsilon\varepsilon_0(\Delta\phi)}{eN} \right\}^{\frac{1}{2}} \quad \cdots \text{(Equation 8)}$$

$\Delta\phi$ ⋯ The difference between a HOMO level of a conductive resin and a work function of a metal
$e$ ⋯ Elementary charge

(Evaluation Results of Hole Density)

According to the above method, the hole densities of the HODs produced using the organic electronics materials (ink compositions) of example 6 and comparative example 2 were calculated, respectively. Relative values were calculated using the hole density obtained in the ink composition of comparative example 2 as a reference (100). Results are listed in Table 4.

[Table 4]

Table 4

| Item | Relative value |
|---|---|
| Example 6 | 483 |
| Comparative example 2 | 100 |

As is clear from Table 4, the hole density of the organic electronics material (example 6) including the polymer obtained through the production method according to the present embodiment is much superior to that of comparative example 2. This indicates that the production method according to the present embodiment can effectively reduce the amount of impurities in the polymer, thereby providing a polymer that can be suitably used as an organic electronics material. Thus, it is possible to provide an organic electronics material with which an organic layer capable of improving conductivity and hole density can be easily formed by using the polymer.

DESCRIPTION OF THE REFERENCE SIGNS

1 Light emitting layer
2 Anode
3 Hole injection layer
4 Cathode
5 Electron injection layer
6 Hole transport layer
7 Electron transport layer
8 Substrate
11 Substrate
12 Anode
13 Organic layer (hole injection layer)
14 Cathode

**Claims**

**1.** A method for producing an arylamine polymer, comprising:

forming a reaction liquid including an arylamine polymer by reacting a raw material monomer including an aromatic compound (A) having two or more halogen atoms or triflate groups directly bonded to an aromatic ring, and an aromatic compound (B) having an amino group, in the presence of a palladium-containing catalyst and a water-insoluble organic solvent;
forming a mixed liquid of the reaction liquid, water, and a water-soluble organic solvent which is compatible with the water-insoluble organic solvent;
separating the mixed liquid into an organic phase and an aqueous phase; and
collecting the organic phase.

**2.** The production method according to claim 1, wherein the arylamine polymer has at least a branched structure represented by formula (I) below

[Chemical Formula 1]

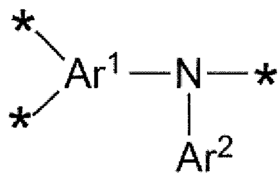

(I)

where $Ar^1$ represents a trivalent organic group derived from an aromatic hydrocarbon or aromatic heterocycle of 2 to 30 carbon atoms, or triarylamine, $Ar^2$ represents an aryl group derived from an aromatic hydrocarbon of 6 to 30 carbon

atoms, and * represents a bonding site with another structure.

3. The production method according to claim 2, wherein in the formula (I), $Ar^2$ has a structure represented by formula (b-1) below

[Chemical Formula 2]

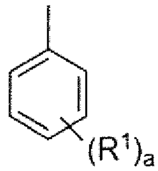

(b − 1)

where $R^1$ represents an alkyl group of 1 to 12 carbon atoms, an electron-withdrawing group, or an electron-donating group, and a is an integer from 0 to 5.

4. The production method according to any one of claims 1 to 3, wherein the raw material monomer further includes an aromatic compound (C), and the aromatic compound (C) has one halogen atom or triflate group directly bonded to an aromatic ring, and a polymerizable functional group.

5. The production method according to any one of claims 1 to 4, wherein a base is further used in the reaction of the raw material monomer.

6. The production method according to claim 5, wherein the base includes an organic alkali metal compound.

7. The production method according to any one of claims 1 to 6, further comprising: adding a heavy metal scavenger to the mixed liquid.

8. The production method according to any one of claims 1 to 7, wherein the water-soluble organic solvent includes an alcohol.

9. The production method according to any one of claims 1 to 8, wherein the water-insoluble organic solvent includes an aromatic hydrocarbon solvent.

10. The production method according to any one of claims 1 to 9, wherein the palladium-containing catalyst includes at least one selected from the group consisting of bis(di-t-butyl(4-dimethylaminophenyl)phosphine)dichloropalladium(II), bis(tri-t-butylphosphine)palladium(0), $PdArBrP(t\text{-}Bu)_3$ (where Ar represents a substituted or unsubstituted aryl group of 6 to 30 carbon atoms), and chloro(2-dicyclohexylphosphino-2',4',6'-triisopropyl-1,1'-biphenyl)[2-(2'-amino-1,1'-biphenyl)]palladium.

FIG.1

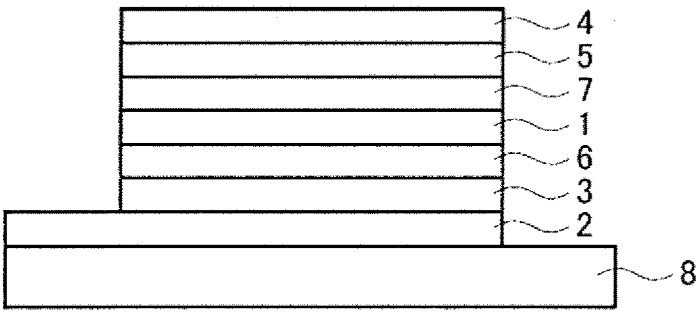


FIG.2

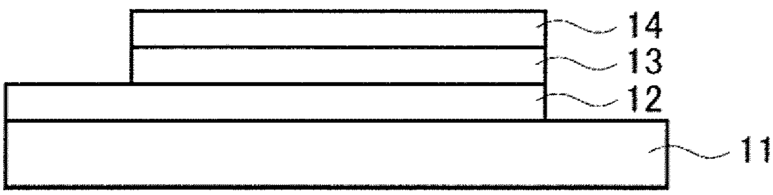

## INTERNATIONAL SEARCH REPORT

International application No.
**PCT/JP2024/024536**

**A. CLASSIFICATION OF SUBJECT MATTER**

***C08G 73/02***(2006.01)i
FI: C08G73/02

According to International Patent Classification (IPC) or to both national classification and IPC

**B. FIELDS SEARCHED**

Minimum documentation searched (classification system followed by classification symbols)

C08G73/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAPlus/REGISTRY (STN), JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| A | KODAMA, Shunsuke et al. Effect of Purification Solvent on Polymer Impurities and Device Performance. ACS Applied Polymer Materials. 11 July 2019, vol. 1, no. 8, pp. 2083-2088, DOI:10.1021/acsapm.9b00385<br>entire text | 1-10 |
| A | JP 2020-122099 A (HITACHI CHEMICAL COMPANY, LTD.) 13 August 2020 (2020-08-13)<br>entire text | 1-10 |
| A | WO 2009/102027 A1 (MITSUBISHI CHEMICAL CORPORATION) 20 August 2009 (2009-08-20)<br>entire text | 1-10 |
| A | JP 2016-143876 A (SAMSUNG ELECTRONICS CO., LTD.) 08 August 2016 (2016-08-08)<br>entire text | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 August 2024** | **03 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/024536**

| Patent document cited in search report | Publication date (day/month/year) | Patent family member(s) | Publication date (day/month/year) |
|---|---|---|---|
| JP 2020-122099 A | 13 August 2020 | (Family: none) | |
| WO 2009/102027 A1 | 20 August 2009 | US 2011/0042661 A1<br>entire text<br>EP 2270069 A1<br>KR 10-2010-0111718 A<br>CN 101945925 A<br>TW 200942564 A | |
| JP 2016-143876 A | 08 August 2016 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011105790 A
- JP 2020122099 A
- JP 2023113263 A